# EUROPÄISCHE PATENTSCHRIFT

(11) **EP 1 736 376 B1**
(45) Veröffentlichungstag und Bekanntmachung des Hinweises auf die Patenterteilung: **06.01.2016**
(21) Anmeldenummer: 06012907.9
(22) Anmeldetag: 22.06.2006
(51) Int. Cl.: B60R 21/13

(54) **Bauteilgruppe für ein Cabriolet-Kraftfahrzeug**
Subassembly for a convertible vehicle
Module pré assemblé pour un véhicule cabriolet

(30) Priorität: 22.06.2005 DE 102005028929
(43) Veröffentlichungstag der Anmeldung: 27.12.2006
(73) Patentinhaber: Valmet Automotive Oy, 23500 Uusikaupunki (FI)
(72) Erfinder: Kasubke, Wolfgang, 49124 Georgsmarienhütte (DE)
(74) Vertreter: Kronthaler, Schmidt & Coll.

(56) Entgegenhaltungen:
- EP-A- 1 084 914
- WO-A-2004/094197
- DE-A1- 10 316 346
- DE-A1-102004 016 362

## Beschreibung

Die Erfindung betrifft eine Bauteilgruppe für ein Cabriolet-Fahrzeug nach der im Oberbegriff des Patentanspruches 1 näher definierten Art.

Bei Cabriolet-Fahrzeugen ist es bekannt, zur Schaffung eines Überlebensraumes für Insassen im Falle eines Fahrzeugüberschlags Überrollschutzsysteme bereitzustellen, welche einen Überrollkörper, wie z. B. einen Überrollbügel aufweisen, welcher einem einzelnen Fahrzeugsitz oder mehreren Fahrzeugsitzen zugeordnet ist und der in seiner Ruhelage in einer fahrzeugfesten Kassette verborgen ist, aus der er bei Erkennen einer Verunfallung des Fahrzeugs schlagartig in eine obere Stützlage verlagerbar und in dieser Stützlage verriegelbar ist.

In der Praxis allgemein verwendete Überrollbügel bestehen typischerweise aus einem U-förmigen Bügel, dessen rohrförmige Schenkel in Standrohren eines fahrzeugfesten Moduls vertikal geführt sind. Im Inneren jedes Schenkels ist eine Spiralfeder angeordnet, welche durch eine Haltevorrichtung unter Vorspannung gehalten wird, die in Abhängigkeit eines Crash-Signals der Fahrzeugsensorik lösbar ist, wodurch der Überrollbügel unter der Wirkung der Feder in Zehntelsekunden ausgefahren und in seiner Stützlage durch eine geeignete Verriegelungsvorrichtung arretiert wird. Die beiden rohrförmigen Schenkel sind dabei durch ein Querjoch miteinander verbunden, über das meist ein gepolstertes Prallelement geschoben ist.

Problematisch ist bei solchen, die gesamte Fahrzeugbreite überspannenden Überrollbügeln mit einer Zwangsführung ihrer Schenkel auf der jeweiligen Fahrzeugseite, dass häufig ein so genannter Schubladeneffekt zu beobachten ist, worunter ein Verkanten oder Verklemmen des Überrollbügels bei dessen Aktivierung aufgrund von Fertigungstoleranzen oder mangelnder Synchronisation der an den Bügelschenkeln angreifenden Antriebe verstanden wird.

Die DE 103 18 594 A1 beschreibt eine weiter entwickelte Überrollschutz-Vorrichtung für ein Kraftfahrzeug mit einem Überrollbügel, welcher wenigstens annähernd U-förmig mit einem Querjoch und seitlichen Schenkeln im Wesentlichen die Fahrzeugbreite überspannend ausgebildet ist. Zur Vermeidung eines Verkantens des Überrollbügels bei dessen Überführung aus einer abgesenkten Ruhelage in eine obere Stützlage entlang ortsfester Führungseinrichtungen ist eine zentrale, durch einen Aktuator angesteuerte Halte- und Auslöseeinrichtung für den Überrollbügel und eine die Verlagerung der Schenkel entlang der Führungseinrichtungen synchronisierende Einrichtung vorgesehen. Darüber hinaus ist zwischen den Schenkeln des Überrollbügels eine Durchladeöffnung vorgesehen.

Als Beispiel für eine nur einem Fahrzeugsitz zugeordnete Überrollschutz-Vorrichtung mit einem Überrollkörper, welcher unabhängig von einem einem anderen Fahrzeugsitz zugeordneten Überrollkörper ausfahrbar ist, wird exemplarisch auf die DE 198 38 989 C1 verwiesen. Darin ist eine einem jeden Fahrzeugsitz zugeordnete Überrollschutz-Vorrichtung offenbart, bestehend aus einer fahrzeugfest angeordneten Kassette, einem in der Kassette ausfahrbar in Führungen gehaltenen und geführtem Überrollkörper in Form eines sich über die gesamte Kassettenbreite erstreckenden Profilbügelkörpers, einer Verriegelungsvorrichtung zur Selbstverriegelung der Ausfahrbewegung und einem Federantriebssystem zum Ausfahren des Profil-Bügelkörpers und mit einer mechanischen Haltevorrichtung zum Halten des Überrollkörpers in einem Ruhezustand und gegen der Vorspannkraft einer Druckfeder des Federantriebssystems.

Eine hinsichtlich der Fertigung vorteilhafte Ausgestaltung einer Überrollschutz-Vorrichtung mit einer Fahrzeugquerwand als eine vorgefertigte Baueinheit, welche an karosseriefesten Aufnahmen hinter Fahrzeugsitzen angeordnet wird, ist beispielsweise in der DE 196 42 821 A1 und der EP 1 084 914 A2 beschrieben.

Eine solche vorgefertigte Trennwand kann gemäß der
DE 10 2004 016 362 A1 mit Zusatzaggregaten ausgerüstet sein. So wird vorgeschlagen, im Unterschied zu einer fahrzeugfesten Anbringung eines Gurtsystems wie z. B. gemäß der
DE 93 04 820 U1 an der vorgefertigten Trennwand Sicherheitsgurt-Automaten anzubringen.

Wenngleich letztgenannte Lösungen eine Vereinfachung der Montage bedeuten, müssen bei der Endmontage unterschiedliche Baugruppen wie eine Querversteifungsstruktur gegebenenfalls mit einer Durchladeöffnung in Kombination mit einem Überrollschutzsystem, ein Verdeck und eventuell an den Verdeckmechanismus angebundene Karosseriebauteile und eine Sitzanlage, im Fahrzeug verbaut werden.

Häufig handelt es sich bei diesen Baugruppen um Zulieferteile, welche bei der Endmontage zeitintensiv zusammengeführt werden müssen, wodurch die Durchlaufzeit von Fahrzeugen in der Endmontage beeinträchtigt wird.

Darüber hinaus ist es nachteilig, dass die Funktionsprüfung sicherheitsrelevanter Komponenten der Bauteilgruppe häufig erst im Fahrzeug möglich ist.

Es ist Aufgabe der vorliegenden Erfindung, eine Bauteilgruppe für ein Cabriolet-Fahrzeug der eingangs genannten Art zu schaffen, mit der bei einer Vielzahl von Komponenten unterschiedlicher Funktionalität die Durchlaufzeit in der Endmontage von Cabriolet-Fahrzeugen erhöht und die Funktionsprüfung sicherheitsrelevanter Komponenten erleichtert werden kann.

Diese Aufgabe wird mit einer Bauteilgruppe für ein Cabriolet-Kraftfahrzeug gemäß den Merkmalen des Patentanspruches 1 gelöst.

Es ist somit eine Bauteilgruppe für ein Cabriolet-Fahrzeug vorgesehen, welche außerhalb des Fahrzeugs vormontiert und in das Fahrzeug einsetzbar ist, umfassend
- eine im Einbauzustand einen Insassenraum und einen heckseitigen Aufnahmeraum trennende Querversteifungsstruktur und
- ein Überrollschutzsystem mit einem karosseriefesten ersten Modul mit Führungseinrichtungen für ein zwischen einer abgesenkten Ruhelage und einer erhöhten Stützlage verfahrbares zweites Modul mit wenigstens einem Überrollkörper, wobei eine lösbare Halteeinrichtung zum Halten des zweiten Moduls in seiner Ruhelage, eine Verriegelungsvorrichtung, mittels der das zweite Modul in einer von seiner Ruhelage abweichenden Position gegen einen in Richtung der Ruhelage wirkenden Kraftangriff selbsttätig abstützbar ist, und ein Antriebssystem, mittels dem das zweite Modul in seiner Ruheposition vorgespannt und im Bedarfsfall in Richtung seiner Stützlage verlagerbar ist, vorgesehen sind.

Erfindungsgemäß umfasst die Bauteilgruppe Sitzelemente aus wenigstens einer der Sitzelementarten Sitzlehnenlager, Sitzlehnen, Sitzunterteile, Kopfstützen aufnahmen Kopfstützen, und ein in das fahrzeugfeste erste Modul integriertes Rückhaltegurtsystem mit Gurtführungen für wenigstens einen Rückhaltegurt und bildet eine außerhalb des Fahrzeugs auf Funktionsfähigkeit prüfbare Baueinheit.

Die erfindungsgemäße Bauteilgruppe bildet somit eine kompakte, ein einziges Modul darstellende Baueinheit, welche außerhalb des Fahrzeugs komplettierbar ist und in einem einzigen Montageschritt in die vorgesehene Fahrzeugkarosserie eingesetzt werden kann. Diese beispielsweise von externen Lieferanten anlieferbare separat komplettierte Baueinheit kann auf einfache Weise vorzugsweise durch Verschraubung, jedoch gegebenenfalls auch durch Verschweißung an der Fahrzeugkarosserie befestigt werden und muss zur elektrischen und hydraulischen Versorgung sowie zum Datenaustausch mit Sensoren und Steuergeräten des übrigen Fahrzeugs nur noch mit entsprechenden Anschlüssen verbunden werden.

Auf diese Weise kann die Endmontage eines Fahrzeugs erheblich beschleunigt und damit der Durchlauf an zu komplettierenden Fahrzeugen erhöht werden.

Darüber hinaus wird durch die Bereitstellung eines Multifunktionsmoduls gemäß der Erfindung eine Gewichtsersparnis erzielt, da separate Gehäuseelemente für die einzelnen, bestimmte Funktionalitäten wahrnehmenden Komponenten entfallen.

Die erfindungsgemäße Bauteilgruppe ist insbesondere unter Sicherheitsaspekten dahingehend vorteilhaft, dass das Zusammenwirken von Sitzelementen und Rückhaltegurtsystem außerhalb des Fahrzeugs geprüft werden kann.

Die in Kombination des Verdecks mit einer extern gefertigten Querversteifungsstruktur, in welche auch das Überrollschutzsystem integriert ist, ist insbesondere dahingehend vorteilhaft, dass mit dem Verdeckmechanismus bewegte Teile, welche der Querversteifung, einer Sitzlehnenstruktur oder dem Überrollschutzsystem zugeordnet sind, zusammen außerhalb des Fahrzeugs komplettiert und geprüft werden können. Dies gilt auch für Sitzelemente, welche mit dem Überrollschutzsystem zusammenwirken.

Sitzelemente der Bauteilgruppe können in einfachster Weise Sitzlehnenlager und Sitzunterteillager sowie Kopfstützenaufnahmen darstellen, welche je nach Konfiguration des Cabriolet-Fahrzeugs mit einer an die erfindungsgemäße Bauteilgruppe anschließenden zweisitzigen oder dreisitzigen Sitzreihe und je nach Ausgestaltung der Sitze selbst an dem ersten fahrzeugfesten Modul des Überrollschutzsystems und/oder an der Querversteifungsstruktur befestigt sein können.

Bei einer erfindungsgemäßen Verwirklichung der Bauteilgruppe mit einem Verdeck und einem heckseitigen Karosseriedeckel wird die Endmontage des Cabriolet-Fahrzeugs weiter dadurch vereinfacht, dass sowohl ein Mehrgelenk zur Öffnung des Karosseriedeckels als auch Antriebsorgane für den Karosseriedeckel bereits in die Baueinheit integriert sind, womit insbesondere Verdecke, deren Bewegung auch die Bewegung des betreffenden Karosseriedeckels inkludiert, außerhalb des Fahrzeugs im vormontierten Zustand geprüft werden können. Des Weiteren entfallen weitere Montageschritte für den heckseitigen Karosseriedeckel. Der heckseitige Karosseriedeckel kann sowohl ein reiner Verdeckkastendeckel als auch ein kombinierter Verdeckkastendeckel-Kofferraumdeckel sein.

Bei einer besonders vorteilhaften Ausgestaltung der erfindungsgemäßen Bauteilgruppe ist zwischen dem heckseitigen Aufnahmeraum und dem Insassenraum eine Durchladeöffnung angeordnet, welche die Unterbringung von sperrigen Gegenständen im Fahrzeug erleichtert. Der heckseitige Aufnahmeraum kann dabei ein Verdeckaufnahmeraum wie auch ein reiner Gepäckaufnahmeraum oder ein kombinierter Verdeck- und Gepäckaufnahmeraum sein.

Die Komponenten eines Sicherheitsgurtsystems, wie z. B. ein Gurtaufroller und eine obere Sicherheitsgurtführung, können über entsprechende Aufnahmen, welche ohne besonderen Aufwand bei der Herstellung der Profile des ersten Moduls bzw. der Querversteifungsstruktur vorgesehen werden können, problemlos in die im Einbauzustand fahrzeugfesten Bauteile der Bauteilgruppe integriert werden.

Das Rückhaltegurtsystem kann dabei nicht nur Sicherheitsgurte zum Angurten von erwachsenen Personen umfassen, sondern auch Kindersitzrückhaltegurte, wobei bei einer besonders vorteilhaften Ausführung auch ein oberer Verankerungspunkt für einen Kindersitzrückhaltegurt, welcher auch als Toptether-Befestigung bezeichnet wird, an einem fahrzeugfesten Bauteil der Bauteilgruppe, insbesondere des Überrollschutzsystems, angeordnet ist.

Bei einer vorteilhaften Ausführung der Erfindung ist jeweils einem Sitz eine Überrollschutz-Vorrichtung mit einem Überrollkörper zugeordnet, wobei die Überrollschutz-Vorrichtungen zweier Fahrzeugsitze einer Sitzreihe vorzugsweise jeweils in entgegengesetzter Richtung im Wesentlichen außermittig zu dem zugeordneten Fahrzeugsitz angeordnet sind.

Das Überrollschutzsystem weist somit für jeden Fahrzeugsitz eine Überrollschutz-Vorrichtung auf, welche unabhängig von der Überrollschutz-Vorrichtung eines anderen Sitzes angetrieben wird, so dass eine Verkantung des ausfahrbaren Moduls bei dessen Ausfahrbewegung und somit eine Beeinträchtigung der Funktionssicherheit vermieden werden können.

Eine außermittige Anordnung der Überrollschutz-Vorrichtungen, das heißt, dass deren Komponenten überwiegend im Bereich einer einer Fahrzeugseite zugewandten Seite des betreffenden Fahrzeugsitzes angeordnet sind, ermöglicht vorteilhafterweise die Anordnung einer großzügigen Durchladeöffnung zwischen den Fahrzeugsitzen.

Alternativ oder ergänzend kann bei einem solchen Überrollschutzsystem der Überrollkörper stangenartig ausgeführt sein, wobei er in seinem Inneren einen axialen Aufnahmekanal für einen Federkraftspeicher des Antriebssystems aufweist.

Die stangenartige Ausgestaltung des Überrollkörpers mit einem axialen Aufnahmekanal für den Federkraftspeicher hat den Vorteil, dass der Federkraftspeicher, welcher zur Verlagerung des Überrollkörpers erforderlich ist, in den Überrollkörper integriert sein kann, wobei durch die Formgebung der Innenkontur des Überrollkörpers entsprechend der Form des Federdruckspeichers auf eine zusätzliche Federführung verzichtet werden kann.

Der Federkraftspeicher kann dabei als eine Druckfeder ausgebildet sein, welche an dem karosseriefesten ersten Modul und dem Überrollkörper abgestützt ist. Abweichend hiervon kann jedoch auch eine Zugfeder vorgesehen sein, welche beispielsweise zwischen einer sich bis in das Innere des Überrollköpers koaxial hierzu erstreckenden Stange und dem durch die lösbare Halteeinrichtung gehaltenen Überrollkörper derart vorgespannt eingebaut ist, dass der Überrollkörper nach einer Freigabe durch die lösbare Halteeinrichtung auf Grund der Zugkraft der Feder in eine obere Stützlage überführt wird.

Bei einer Ausführung ohne jegliche Führungsstange kann eine solche Zugfeder auch an einem karosseriefesten Bolzen, welcher sich beispielsweise durch einen Längsschlitz in das Innere des Überrollbügels erstreckt, gehalten sein, so dass der Federkraftspeicher ohne weitere Führung vollständig durch den Überrollkörper geführt ist.

Eine vollständige Führung des Federkraftspeichers durch den Überrollkörper ist auch bei einer Druckfeder möglich, welche zwischen einem an dem Überrollkörper ausgebildeten Anschlag und einem sich durch eine Ausnehmung in den Überrollkörper erstreckenden karosseriefesten Anschlag, welcher beispielsweise als Bolzen mit einem Federteller ausgebildet sein kann, unter Druckspannung stehend eingebaut ist.

Hiermit wird eine schlanke und kompakte Bauweise der jeweiligen Überrollschutz-Vorrichtung erzielt, welche gegebenenfalls zusammen mit der außermittigen Anordnung der Überrollschutz-Vorrichtungen beispielsweise hinter den Fondsitzen eine große Durchlademöglichkeit für sperrige Güter zwischen einem Fahrzeuginnenraum und einem heckseitigen Aufnahmeraum bietet.

Bei einer weiteren vorteilhaften Ausgestaltung der erfindungsgemäßen Bauteilgruppe ist der Überrollkörper des Überrollschutzsystems als Überrollbügel ausgebildet, welcher im Wesentlichen die Fahrzeugbreite überspannend und wenigstens annähernd U-förmig mit einer Traverse und seitlichen Schenkelelemente ausgebildet ist.

Zur Reduzierung der Teileanzahl und zur Erhöhung der Steifigkeit des Überrollbügels ist es vorteilhaft, wenn die Traverse und die Schenkelelemente des Überrollbügels einstückig ausgeführt sind.

Wenn für den Überrollbügel eine zentrale Halte- und Auslöseeinrichtung und eine die Verlagerung der Schenkel des Überrollbügels entlang der Führungseinrichtungen synchronisierende Synchronisationseinrichtung vorgesehen ist, wird eine zeitversetzte Freigabe der Schenkelelemente des Überrollbügels bei dessen Aktivierung verhindert und dem so genannten Schubladeneffekt entgegengewirkt, da ein Verkanten oder Verklemmen des Überrollbügels in Folge eines unterschiedlichen Antriebs der Schenkelelemente bei einer Ausfahrbewegung vermieden wird.

Vorzugsweise, aber nicht erfindungsgemäß, ist die Synchronisationseinrichtung hierzu mit einer Synchronisationswelle ausgebildet, welche parallel zu der Traverse des Überrollbügels im Einbauzustand ortsfest gelagert ist und mit den Schenkelelementen jeweils über ein Zahnprofil, welches in eine an dem zugeordneten Schenkelelement ausgebildete Rastleiste eingreift, verbunden ist. Die Synchronisationswelle kann dabei gemäß der DE 103 18 594 A1 beschriebenen Synchronisationswelle ausgebildet sein.

Bei einer schlanken Ausgestaltung der Führungseinrichtungen des Überrollkörpers an dem ersten Modul können diese ein Rohrprofil aufweisen, in dem in Ruhelage des Überrollkörpers wenigstens ein oberer Endbereich und in Stützlage ein unterer Endbereich des Überrollkörpers aufgenommen sind.

Zur weiteren Bauraum- und Gewichtsreduzierung kann bei einer nicht erfindungsgemäßen Ausführung vorgesehen sein, dass das eine Führungseinrichtung des Überrollkörpers bildende Rohrprofil mit seinem unteren Rand gegenüber einem Fußelement des ersten Moduls beabstandet angeordnet ist. Zur Verbindung des Rohrprofils mit dem Fußelement des ersten Moduls kann dabei ein seitlich des Rohrprofils befestigtes Verbindungsprofil, welches beispielsweise ein U-Profil oder ein Kastenprofil sein kann, vorgesehen sein.

Die Führungseinrichtungen des fahrzeugfesten ersten Moduls können genauso wie die Bauelemente des ausfahrbaren Moduls, insbesondere der Überrollkörper, aus kostengünstigen Strangpressprofilen hergestellt sein.

Dabei kann z. B. das als Führungseinrichtung dienende Rohrprofil in einfacher Weise mit weiteren Funktionselementen kombiniert werden, wie z. B. mit einer Rasteinrichtung der Verriegelungseinrichtung, welche an dem Rohrprofil abgestützt sein kann. So kann das Rohrprofil bei einer sehr kostengünstigen Ausführung z. B. eine umfangsseitige Ausnehmung zur Aufnahme der hieran abgestützten Rasteinrichtung der Verriegelungseinrichtung aufweisen, wobei die Rasteinrichtung in Bewegungsrichtung des Überrollkörpers formschlüssig an dem Rohrprofil gehalten ist und nicht weiter mit dem Rohrprofil verbunden ist.

Die lösbare Halteeinrichtung zum Halten des zweiten Moduls mit dem Überrollkörper in seiner Ruheposition kann grundsätzlich von bekannter Bauart sein und z. B. ein um eine feste Drehachse schwenkbar gelagertes Verriegelungselement umfassen, welches mit einem Klinkenabschnitt ausgebildet ist, welcher in Ruheposition des Überrollkörpers in Eingriff mit einem Verriegelungselement-Gegenkörper an dem Überrollkörper steht. Mittels eines Aktuators kann das Verriegelungselement bei einem Crash-Signal derart verschwenkt werden, dass der Klinkenabschnitt zur Überführung des Überrollkörpers in dessen Stützposition außer Eingriff Verriegelungselement-Gegenkörper gebracht wird.

Eine solche Ausgestaltung der lösbaren Halteeinrichtung und der hiermit ausgestatteten Überrollschutz-Vorrichtung ermöglicht eine sichere und kostengünstige Verriegelung des Überrollkörpers in seiner Ruheposition, wobei die Halteeinrichtung vorteilhafterweise mit wenigen ohne großen Präzisionsaufwand zu fertigenden Bauteilen realisiert werden kann.

Eine weitere vorteilhafte Ausführung gemäß der Erfindung sieht vor, dass das schwenkbare Verriegelungselement, welches mit einem Verriegelungselement-Gegenkörper des zweiten Moduls in Ruheposition des Überrollkörpers in Eingriff steht und im Crash-Fall den Überrollkörper zur Überführung in dessen Stützposition freigibt, in Ruheposition durch einen im Crash-Fall aufschmelzbaren Schmelzeinsatz des Aktuators gehalten ist.

Die Verwendung eines Schmelzeinsatzes zum Halten des Verriegelungselementes und zum Aufheben der Verriegelungsstellung im Crash-Fall gewährleistet auf einfache und kostengünstige Art und Weise eine zuverlässige und schnelle Auslösung des Überrollkörpers. Wenn nur das schwenkbar gelagerte und in Ruheposition des Überrollkörpers in Eingriff mit dem Verriegelungselement-Gegenkörper stehende Verriegelungselement durch den Schmelzeinsatz gehalten werden muss, kann der Schmelzeinsatz auf wesentlich niedrigere Kräfte ausgelegt sein, als er zum direkten Halten des zweiten Moduls bzw. des Überrollkörpers ausgelegt sein müsste. Die entsprechend reduzierte Dimensionierung des Schmelzeinsatzes ermöglicht wiederum ein schnelles Aufschmelzen und damit Durchtrennen der hiermit verbundenen Bauteile, womit die Auslösung des Überrollkörpers in sehr kurzer Zeit erfolgen kann.

Der Schmelzeinsatz kann prinzipiell eine beliebige Form haben und z. B. plattenförmig oder stab- bzw. drahtförmig ausgebildet sein. Auch das schwenkbare Verriegelungselement kann bei der Halteeinrichtung des erfindungsgemäßen Überrollschutzsystems grundsätzlich in beliebiger Form ausgestaltet sein.

In einer vorteilhaften Ausgestaltung der Erfindung kann zwischen dem Verriegelungselement und dem Aktuator ein Sperrglied angeordnet sein, welches das Verriegelungselement in einer den Überrollkörper haltenden Sperrstellung hält oder freigibt. Dabei kann es vorgesehen sein, dass das Sperrglied in Sperrstellung gegen einen Sitz, welcher durch den aufschmelzbaren Schmelzeinsatz des Aktuators gehalten ist, mittels eines Energiespeichers vorgespannt ist. Bei einem erkannten Crash kann der Sitz des Sperrglieds durch ein Aufschmelzen des Schmelzeinsatzes blitzartig aufgehoben werden, so dass das vorgespannte Sperrglied in Richtung des aufgehobenen Sitzes entweichen und das Verriegelungselement freigeben kann.

Eine solche Ausgestaltung mit einem Sperrglied ist in der deutschen Patentanmeldung (Aktenzeichen der Anmelderin: Kk/P-01037/01039 DE, gleicher Anmeldetag) näher beschrieben.

Bei einer nicht erfindungsgemäßen Ausführung ohne separates Sperrglied kann das Verriegelungselement z. B. radial direkt gegen einen Sitz, welcher durch einen aufschmelzbaren Schmelzeinsatz in Ruhelage des Systems gehalten ist, gedrückt sein. Wenn an dem Verriegelungselement andererseits in Rotationsrichtung die Zugkraft des vorgespannten Überrollkörpers oder eines Vorspannelements angreift, wird durch die Aufhebung des Sitzes in Folge eines Aufschmelzens des Schmelzeinsatzes eine die Halteeinrichtung lösende Rotationsbewegung des Verriegelungselementes ermöglicht.

Bei einer weiteren vorteilhaften, aber nicht erfindungsgemäßen Ausführungsform kann das Verriegelungselement in Ruheposition in Rotationsrichtung radial derart mit einem Grundkörper durch einen Schmelzeinsatz verbunden sein, dass es eine Zugkraft gegenüber dem Grundkörper ausübt, wobei der Grundkörper ein Ende des Schmelzeinsatzes und das Verriegelungselement das andere Ende des Schmelzeinsatzes trägt.

In weiterer vorteilhafter Ausgestaltung der Erfindung kann das Verriegelungselement in der Ruhelage auch in einer Anschlagposition gehalten sein, aus der es im Crash-Fall durch einen Aktuator mit einem pyrotechnischen Treibsatz in einer Rotationsposition überführbar ist.

Die beschriebenen Ausgestaltungen einer lösbaren Halteeinrichtung und der hiermit ausgestatteten Überrollschutz-Vorrichtung gemäß der Erfindung ermöglichen sämtlich eine sichere und kostengünstige Verriegelung des Überrollkörpers in seiner Ruheposition, wobei die Halteeinrichtung vorteilhafterweise mit wenigen ohne großen Präzisionsaufwand zu fertigenden Bauteilen realisiert werden kann.

Die Verriegelungsvorrichtung weist bei einer erfindungsgemäß ausgestalteten Bauteilgruppe wenigstens eine erste Rasteinrichtung auf, die zum Abstützen des zweiten Moduls mit einer zweiten Rasteinrichtung in Wirkverbindung bringbar ist und die eine Bewegung des zweiten Moduls ausgehend von seiner Ruhelage in Richtung seiner Stützlage zulässt.

Die erste Rasteinrichtung kann bei einer einfachen Ausführung eine Sperrklinke mit einem Zahnprofil aufweisen, während die zweite Rasteinrichtung mit einer der Geometrie des Zahnprofils der ersten Rasteinrichtung angepassten Rastleiste ausgebildet ist. Die Sperrklinke ist dabei vorzugsweise in Richtung der Rastleiste angefedert gelagert.

In einer weiteren Ausgestaltung der Erfindung kann die Verriegelungsvorrichtung zum selbsttätigen Verrasten des ausfahrbaren zweiten Moduls in dessen teilweise oder vollständig ausgefahrener Position mit einer ersten und einer zweiten Rasteinrichtung ausgebildet sein, wobei eine der Rasteinrichtungen mit einem der Module verbunden ist und einen exzentrisch um eine Drehachse gelagerten, mit einem Zahnprofil ausgeführten Sperrkörper aufweist und wobei die jeweils andere Rasteinrichtung als eine dem Sperrkörper zugewandte Oberfläche des jeweils anderen Moduls ausgebildet ist, mit der das Zahnprofil in einer Wirkposition des Sperrkörpers, in der eine Bewegung des zweiten Moduls in Richtung seiner Ruhelage verhindert ist, in Reibeingriff steht.

Eine derart ausgestaltete Verriegelungsvorrichtung hat den Vorteil eines einfachen Aufbaus mit wenigen, ohne hohe Präzisionsanforderungen zu fertigenden Bauteilen.

So kann die zweite Rasteinrichtung des erfindungsgemäßen Überrollschutzsystems als eine einfache Oberfläche eines Bauteils eines der Module ausgeführt sein, die ohne weitere Fertigungsschritte zur Verfügung steht, wohingegen bei herkömmlichen Überrollschutzsystemen aufwändig herzustellende und mit Zahnprofilen ausgeführte Rasteinrichtungen vorgesehen sind, die mit einem Zahnprofil einer Sperrklinke zum Verriegeln des Überrollschutzsystems in Eingriff gebracht werden müssen.

Bei einer Ausgestaltung des Überrollkörpers als Überrollbügel mit einer die Verlagerungsbewegung der Schenkelelemente synchronisierenden Synchronisationswelle, welche mit Rastleisten der Schenkelelemente in Eingriff steht, kann die Verriegelungseinrichtung in vorteilhafter Weise derart ausgestaltet sein, dass ein Rastelement der ersten Rasteinrichtung als ein Zahnprofilelement ausgeführt ist, welches in verriegeltem Betriebszustand der Verriegelungsvorrichtung sowohl mit der Synchronisationswelle als auch mit wenigstens einer der Rastleisten der Schenkelelemente wirkverbunden ist.

Die Verriegelungseinrichtung ist somit in einem Bereich der Bauteilgruppe angeordnet, der in Ruhelage des zweiten Moduls in Fahrzeugquerrichtung durch den Überrollbügel belegt ist, womit zwischen den Führungseinrichtungen der Schenkelelemente eine große Durchladeöffnung vorgesehen werden kann. Zudem ist bei einer derartigen Ausgestaltung der Verriegelungsvorrichtung, welche die Komponenten der Synchronisationseinrichtung nutzt, die Bauteilanzahl reduziert.

Weitere Vorteile und vorteilhafte Ausgestaltungen einer Bauteilgruppe gemäß der Erfindung sind der Beschreibung, der Zeichnung und den Patentansprüchen entnehmbar.

Mehrere Ausführungsbeispiele einer erfindungsgemäß ausgestalteten Bauteilgruppe eines Cabriolet-Fahrzeugs sind in der Zeichnung schematisch vereinfacht dargestellt und werden in der nachfolgenden Beschreibung näher erläutert, wobei der Übersichtlichkeit halber für bau- und funktionsgleiche Bauteile dieselben Bezugszeichen verwendet werden.

Es zeigt:
- Fig. 1: eine vereinfachte perspektivische Ansicht einer Bauteilgruppe für ein Cabriolet-Fahrzeug;
- Fig. 2: einen freigestellten in Fig. 1 näher gekennzeichneten Bereich II;
- Fig. 3: eine Verriegelungsvorrichtung eines Überrollschutzsystems der Bauteilgruppe gemäß Fig. 1;
- Fig. 4: eine perspektivische Einzeldarstellung von Elementen der Verriegelungsvorrichtung der Fig. 3;
- Fig. 5: die Verriegelungsvorrichtung gemäß Fig. 4 in einer schematisierten Seitenansicht;
- Fig. 6: eine vereinfachte perspektivische Ansicht einer weiteren Bauteilgruppe für ein Cabriolet-Fahrzeug;
- Fig. 7: eine perspektivische Rückansicht der Bauteilgruppe der Fig. 6;
- Fig. 8: eine Verriegelungsvorrichtung des Überrollschutzsystems der Bauteilgruppe gemäß Fig. 6 und Fig. 7;
- Fig. 9: die Verriegelungsvorrichtung gemäß Fig. 8 in einer freigestellten Darstellung;
- Fig. 10: eine alternative Ausgestaltung einer Verriegelungsvorrichtung in vereinfachter, freigestellter perspektivischer Ansicht;
- Fig. 11: eine vereinfachte, freigestellte, dreidimensionale Darstellung einer Halteeinrichtung für das Überrollschutzsystem gemäß Fig. 1 oder Fig. 6;
- Fig. 12: eine vereinfachte Seitenansicht der Halteeinrichtung der Fig. 11 nach Auslösung eines Überrollkörpers des Überrollschutzsystems;
- Fig. 13: eine Vorderansicht einer weiteren pyrotechnischen Ausführung einer lösbaren Halteeinrichtung für das Überrollschutzsystem der Bauteilgruppe gemäß Fig. 1 oder Fig. 6 bei einem Ruhezustand des Überrollkörpers;
- Fig. 14: eine vereinfachte perspektivische Prinzipdarstellung einer weiteren erfindungsgemäßen Bauteilgruppe;
- Fig. 15: eine Rückansicht der Bauteilgruppe der Fig. 14;
- Fig. 16: eine perspektivische Draufsicht auf einen Bereich der Bauteilgruppe der Fig. 14 und Fig. 15;
- Fig. 17: eine dreidimensionale Einzeldarstellung einer Überrollschutz-Vorrichtung eines Überrollschutzsystems der Bauteilgruppe gemäß Fig. 14 bis Fig. 16;
- Fig. 18: eine Explosionsdarstellung der Überrollschutz-Vorrichtung der Fig. 17;
- Fig. 19: eine Teilschnittansicht eines Bereichs der Verriegelungsvorrichtung der Überrollschutz-Vorrichtung gemäß Fig. 17 und Fig. 18;
- Fig. 20: eine dreidimensionale Darstellung einer Rasteinrichtung der Verriegelungsvorrichtung gemäß Fig. 19 in Alleinstellung;
- Fig. 21: eine perspektivische Detailansicht der Überrollschutz-Vorrichtung der Bauteilgruppe gemäß Fig. 14 bis Fig. 16;
- Fig. 22: eine perspektivische Teilansicht einer Führung eines Überrollkörpers in einer Führungseinrichtung;
- Fig. 23: eine perspektivische Teilansicht einer Zentrierung des Überrollkörpers der Fig. 22 an einem unteren Anlagepunkt in dessen gesenkter Bereitschaftsstellung;
- Fig. 24: eine vereinfachte perspektivische Teilansicht eines Höhenanschlags des Überrollkörpers der Fig. 22 und Fig. 23 an seiner Führungseinrichtung; und
- Fig. 25: eine alternative Verbindung seitlicher fahrzeugfester Führungseinrichtungen mit einem diese verbindenden Querträger.

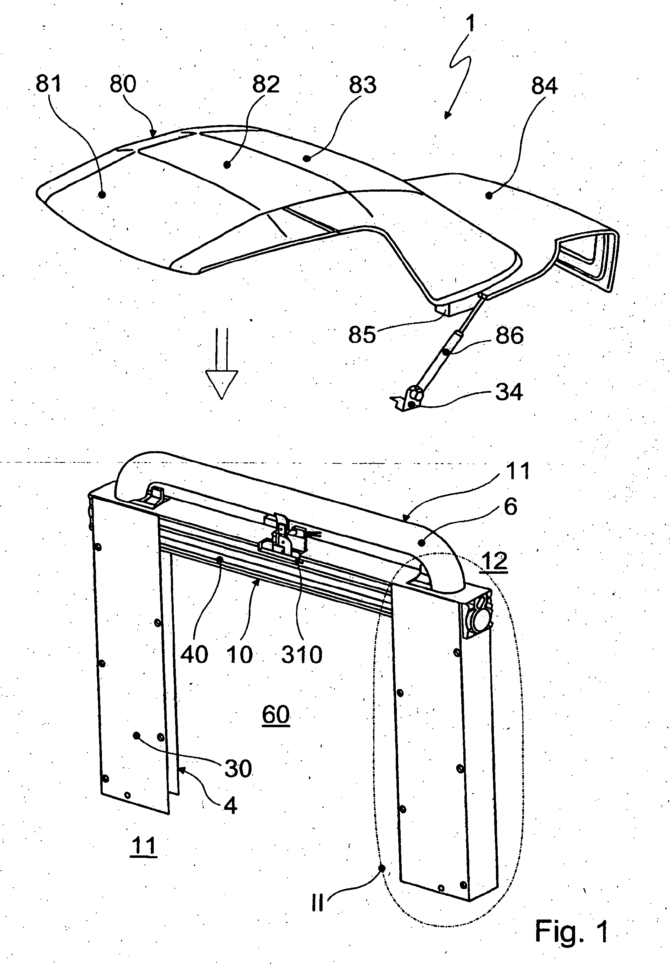

Bezug nehmend auf Fig. 1 ist eine erste Bauteilgruppe 1 für ein Cabriolet-Fahrzeug gezeigt, welche eine Querversteifungsstruktur 10 aufweist, die in Einbauzustand in eine Karosserie des Cabriolet-Fahrzeugs einen hinsichtlich seiner Lage in Fig. 1 symbolisch angedeuteten Insassenraum 13 von einem heckseitigen Aufnahmeraum 12 trennt.

Die Querversteifungsstruktur 10 ist dabei integral mit einem Überrollschutzsystem 11 ausgebildet, welche ein karosseriefestes erstes Modul 4 mit Führungseinrichtungen 30 für ein zwischen einer abgesenkten Ruhelage und einer erhöhten Stützlage verfahrbares zweites Modul 5 mit einem hier als Überrollbügel ausgebildeten Überrollkörper 6 aufweist.

Der Überrollbügel 6 erstreckt sich in Fahrzeugquerrichtung im Wesentlichen über die Fahrzeugbreite und ist bei der in Fig. 1 gezeigten Ausführung annähernd U-förmig mit einer Traverse 63 und seitlichen Schenkelelementen 64A, 64B einstückig ausgebildet. Die Schenkelelemente 64A und 64B wirken jeweils mit einer von zwei vorliegend baugleichen Führungseinrichtungen 30 des ersten Moduls 4 zusammen und werden bei einer Ausfahrbewegung des zweiten Moduls 5 in eine durch einen Pfeil Z in Fig. 1 dargestellte Bewegungsrichtung ausgehend von der dargestellten Ruhelage bewegt.

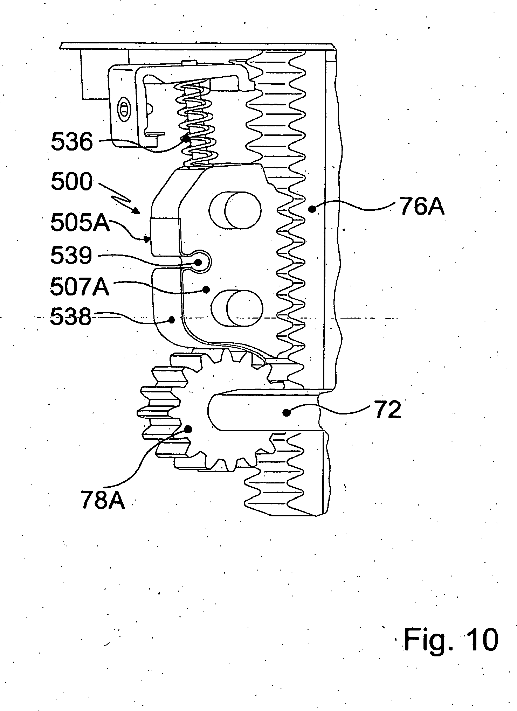

Zum Halten des zweiten Moduls 5 in seiner Ruhelage ist eine zentrale Halteeinrichtung 310 vorgesehen, welche vorliegend mittig an einem die Führungseinrichtungen 30 des fahrzeugfesten Moduls 4 des Überrollschutzsystems 11 verbindenden und mit dem karosseriefesten ersten Modul 4 die Querversteifungsstruktur 10 bildenden Querträger 40 angeordnet ist und in Fig. 10 näher gezeigt ist.

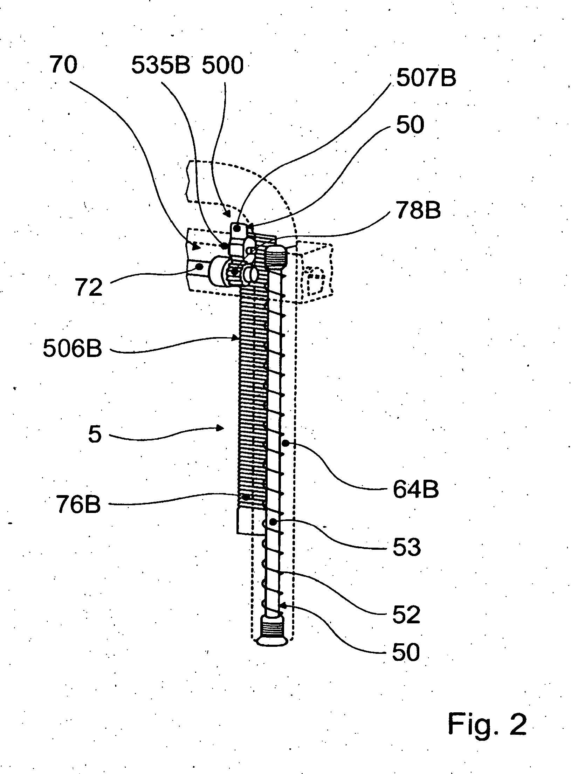

Des Weiteren umfasst das Überrollschutzsystem 11 eine beispielsweise in Fig. 2 näher gezeigte Verriegelungsvorrichtung 500, mittels der das zweite Modul 5 in einer von seiner Ruhelage abweichenden Position gegen einen in Richtung der Ruhelage wirkenden Kraftangriff selbsttätig abstützbar ist.

Zur Verlagerung des Überrollbügels 6 in seine Stützlage ist ein Antriebssystem 50 vorgesehen, welches vorliegend mit einem beispielsweise in Fig. 2 näher gezeigten Federkraftspeicher 52 ausgebildet ist und mittels dem das zweite Modul 5 in seiner Ruheposition vorgespannt ist.

Das Überrollschutzsystem 11 umgreift eine Durchladeöffnung 60, welche unter dem parallel zu der Traverse 63 des Überrollbügels 6 verlaufenden Querträger 40 zwischen den Schenkelelementen 64A, 64B des Überrollbügels 6 bzw. deren Führungseinrichtungen 30 angeordnet ist.

Das Überrollschutzsystem 11 bildet zusammen mit der Querversteifungsstruktur 10 und einem in Fig. 1 nur prinzipmäßig dargestellten Verdeck 80 eine außerhalb des Fahrzeugs vormontierte und komplettiert in das Fahrzeug einsetzbare Baueinheit.

Das Verdeck 80 umfasst vorliegend in bekannter Art und Weise zusammenfaltbare Dachsegmente 81, 82, 83 und einen heckseitigen Karosseriedeckel 84, welcher vorliegend einen kombinierten Verdeckkastendeckel und Kofferraumdeckel, welcher in zwei Richtungen geöffnet werden kann, bildet. Das Verdeck 40 ist mit einem Hauptlager 85 an der Querversteifungsstruktur 10 montiert und weist vorliegend ein hydraulisches Antriebssystem 86 auf, welches mit einem Fußelement 34 an der Querversteifungsstruktur 10 gelagert ist.

Das gezeigte Verdeck 80 steht vorliegend nur beispielhaft für ein Verdeck beliebiger Ausgestaltung, welches sowohl ein Softtop als auch ein Hardtop sein kann und zwei oder drei Dachsegmente aufweisen kann, welche hydraulisch oder elektrisch beispielsweise über aktive Gelenke angetrieben sein können.

Wie den Fig. 2 bis Fig. 6 zu entnehmen ist, weist das Überrollschutzsystem 11 eine die Verlagerung der Schenkel 64A, 64B des Überrollbügels 6 entlang der Führungseinrichtungen 30 synchronisierende Synchronisationseinrichtung 70 auf.

Die Synchronisationseinrichtung 70 ist mit einer Synchronisationswelle 72 ausgebildet, welche parallel zu der Traverse 63 im Einbauzustand ortsfest in dem als Hohlstrangpressprofil ausgebildetem Querträger 40 gelagert ist und mit den Schenkelelementen 64A, 64B jeweils über ein Zahnprofil 78A, 78B, welches in eine an dem zugeordneten Schenkelelement 64A, 64B ausgebildete Rastleiste 76A, 76B eingreift, verbunden ist.

Die Verriegelungsvorrichtung 500, mittels der das zweite Modul 5 in jeder von seiner Ruhelage abweichenden Position nach unten abgestützt ist, weist im Bereich jedes Schenkelelementes 64A, 64B eine erste Rasteinrichtung 505A bzw. 505B auf, die zum Abstützen des zweiten Moduls 5 bzw. des Überrollbügels 6 mit einer zweiten Rasteinrichtung 506A bzw. 506B in Wirkverbindung bringbar ist und die eine Bewegung des Überrollbügels 6 in Richtung seiner Stützlage zulässt.

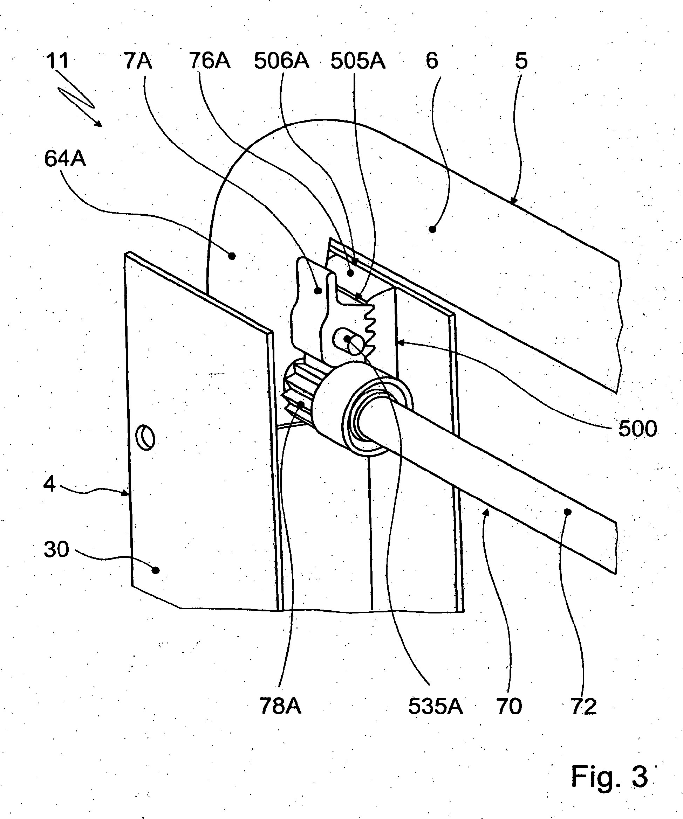

Die in Fig. 2 und Fig. 3 dargestellten ersten Rasteinrichtungen 505A, 505B weisen jeweils Rastelemente 507A, 507B auf, welche als Zahnprofilelemente ausgeführt sind und in verriegeltem Betriebszustand der Verriegelungsvorrichtung 500 gleichzeitig mit dem durch verdrehsicher auf der Synchronisationswelle angeordnete Zahnräder 78A, 78B gebildetem Zahnprofil der Synchronisationswelle 72 und mit den Rastleisten 76A, 76B in der in der Zeichnung näher dargestellten und die Verriegelungsvorrichtung 500 verriegelnden Art und Weise wirkverbunden sind.

In entriegeltem Betriebszustand der Verriegelungsvorrichtung 500 sind die Zahnprofilelemente 507A, 507B der ersten Rasteinrichtungen 505A, 505B mit den Zahnrädern 78A, 78B der Synchronisationswelle 72 wirkverbunden und außer Eingriff mit den Rastleisten 76A, 76B geführt, so dass der Überrollbügel 6 ungehindert in seine Stützlage ausfahren kann.

Alternativ hierzu kann es auch vorgesehen sein, dass die Zahnprofilelemente 507A, 507B in entriegeltem Betriebszustand der Verriegelungsvorrichtung 500 weder mit der Synchronisationswelle 72 noch mit einer der Rastleisten 76A bzw. 76B wirkverbunden sind.

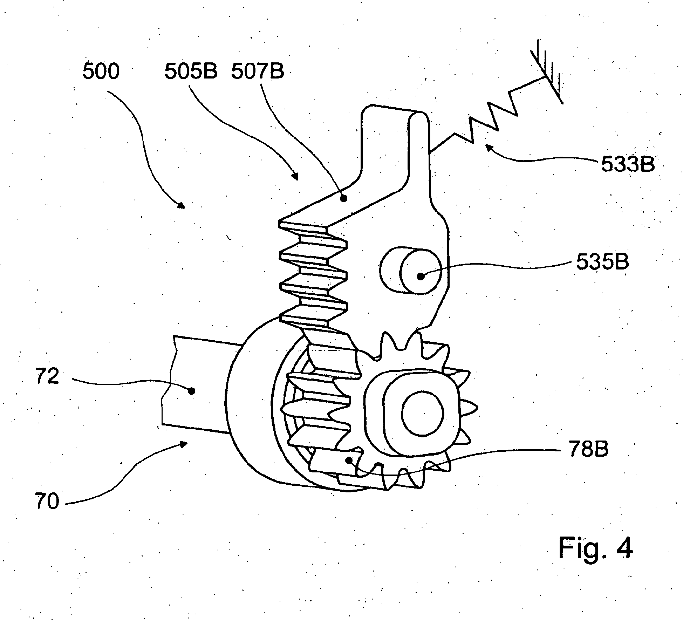

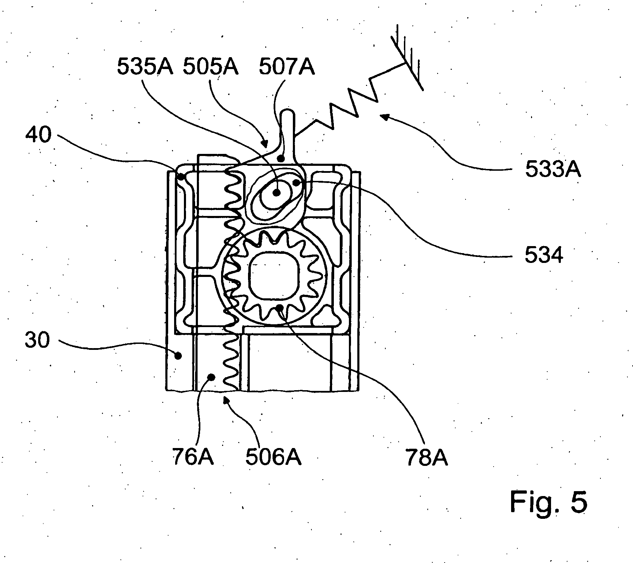

Da die beiden Zahnräder 78A, 78B der Synchronisationswelle 72 mit den Rastleisten 76A und 76B in Eingriff stehen, werden die Zahnräder 28A, 28B beim Ausfahren des Überrollbügels 6 in Rotation versetzt und die Zahnprofilelemente 507A, 507B der ersten Rasteinrichtungen 505A, 505B entgegen der Federwirkung von in Fig. 4 und Fig. 5 dargestellten Federeinrichtungen 533A, 533B aus dem Eingriff mit den Rastelementen der zweiten Rasteinrichtungen 506A und 506B darstellenden Rastleisten 76A und 76B geführt.

Dabei werden die Zahnprofilelemente 507A, 507B gesteuert aus dem Eingriff mit den Rastleisten 76A und 76B geführt, wobei die Zahnprofilelemente 507A, 507B jeweils fest mit einem Führungselement 535A, 535B verbunden sind, das in einer wenigstens annähernd bogenförmigen Steuerkurve 534 verschieblich ist. Die Steuerkurve 534 ist in einem fest mit dem Querträger 40 oder mit den Führungselementen 30 verbundenen Bauteil oder darin selbst ausgebildet.

Um eine Rotation der Zahnprofilelemente 507A und 507B gegenüber der Synchronisationswelle 72 bzw. den Zahnrädern 78A, 78B zu vermeiden, sind die Führungselemente 535A, 535B in der in Fig. 5 dargestellten Art und Weise annähernd ellipsoid ausgebildet. Damit folgen die Zahnprofilelemente 507A, 507B bei einer Rotation der Synchronisationswelle 72 den durch die Steuerkurven 534 vorgegebenen Kurvenbahnen und werden ohne Rotation entweder aus dem Eingriff mit den Rastleisten 76A und 76B oder in Eingriff mit diesen gebracht.

Dabei ist die Länge der Steuerkurven 534 derart dimensioniert, dass die Zahnprofilelemente 507A und 507B im Auslösefall des Überrollschutzsystems 11 durch die Zahnräder 78A, 78B zunächst aus dem Eingriff mit den Rastleisten 76A und 76B geführt werden. Bei weiterer Rotation der Zahnräder 78A, 78B werden die Rastelemente 507A und 507B zusätzlich derart aus dem Eingriff mit den Zahnrädern 78A, 78B geführt, dass die Zahnprofilelemente 507A und 507B keine weitere gesteuerte Verschiebung und/oder Verkippung erfahren, während die Zahnräder 78A, 78B mit ihren Zähnen an den damit korrespondierenden Zahnprofilen der Zahnprofilelemente 507A und 507B unter Kontakt vorbeigeführt werden.

Im Stillstand des Überrollbügels 6 werden die Zahnprofilelemente 507A und 507B durch die Federeinrichtungen 533A, 533B, deren Kraftrichtungen vorzugsweise wenigstens annähernd parallel zu den Verläufen der Steuerkurven 534 sind, in Richtung der Zahnräder 78A, 78B gedrückt, so dass sich die Zahnprofilelemente 507A und 507B auf jeden Fall in einer derartigen Wirkposition befinden, dass sie bei einem Kraftangriff an dem Überrollbügel 6 in Richtung seiner Ruhelage sich sofort wieder in Eingriff mit den Zahnrädern 78A, 78B befinden. Damit ist gewährleistet, dass die Rastelemente 507A, 507B bei einer Einfahrbewegung des Überrollbügels 6 in Richtung seiner Ruhelage und einer damit korrespondierenden Rotation der Zahnräder 78A, 78B von diesen umgehend in Eingriff mit den Rastleisten 76A und 76B geführt werden und die Verriegelungsvorrichtung 500 in ihren verriegelten Betriebszustand überführt wird, wodurch ein unerwünschtes Einfahren des Überrollbügels 6 in Richtung seiner Ruhelage sicher vermieden ist.

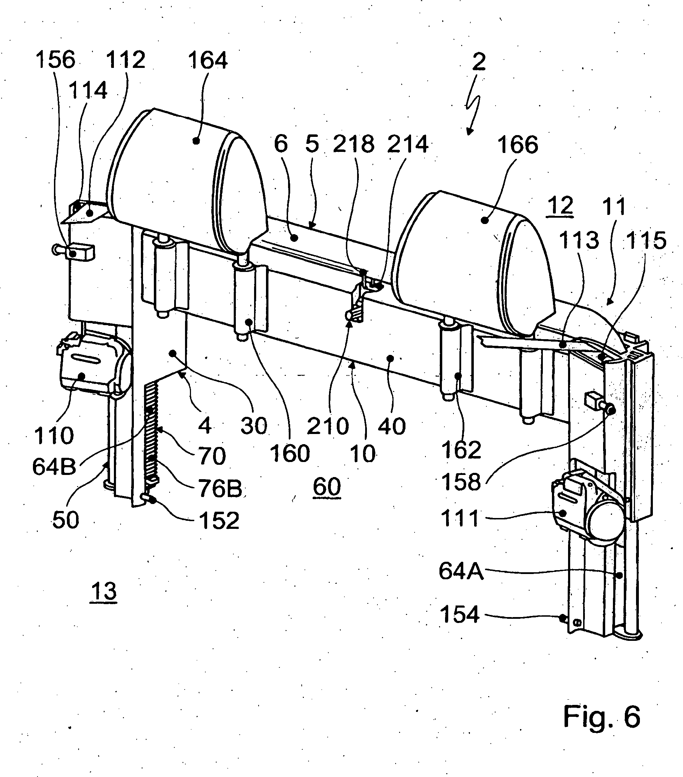

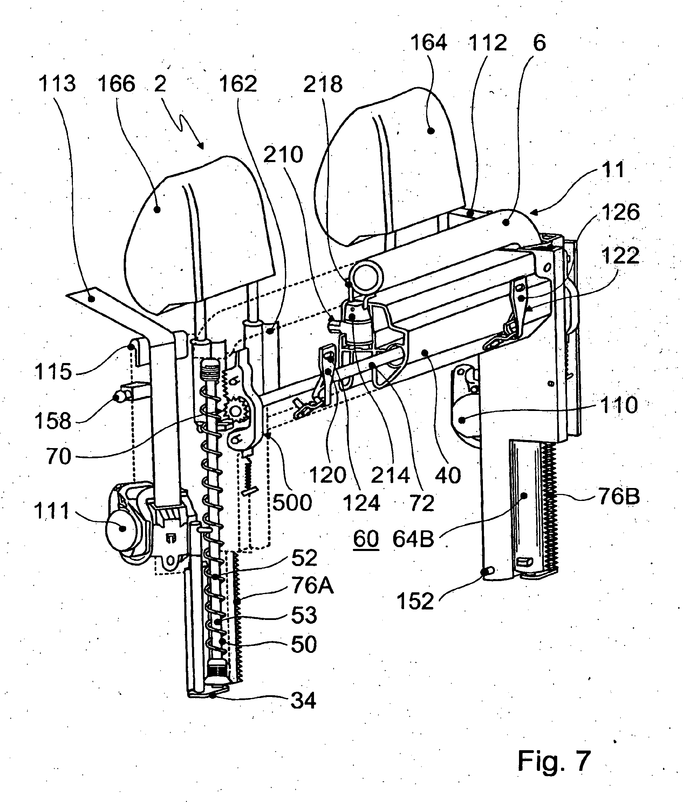

Die Fig. 6 und Fig. 7 zeigen eine weitere Bauteilgruppe 2 für ein Cabriolet-Fahrzeug, welche wie die erste Bauteilgruppe 1 ein Überrollschutzsystem 11 mit den zugehörigen Komponenten und eine Querversteifungsstruktur 10 aufweist und mit einem Verdeck 80 zu einer vormontierten Baueinheit verbunden werden kann.

Darüber hinaus umfasst diese außerhalb des Fahrzeugs komplettierte Bauteilgruppe 2 auch Sitzelemente in Form von unteren Sitzlehnenlagern 152, 154 und oberen Sitzlehnenverriegelungsbolzen 156, 158 sowie Kopfstützenlagern 160, 162 mit jeweils einer zugeordneten Kopfstütze 164 bzw. 166 für einen ersten Fahrzeugsitz 26 und einen zweiten Fahrzeugsitz 28 einer Sitzreihe, welche vorliegend Fond-Sitze darstellen.

Die Sitzelemente, welche vorliegend an den karosseriefesten Führungen 30 des Überrollschutzsystems 11 und an dem Querträger 40 der Querversteifungsstruktur 10 befestigt sind, können in weiteren Ausführungen auch komplette Sitzlehnen oder Sitzunterteile umfassen, welche ggf. als Teil des Überrollschutzsystems von diesem im Crash-Fall in eine den darauf befindlichen Insassen in eine Crash-Position konditionierende Art und Weise ansteuerbar sind.

Die somit ebenfalls ein Multifunktionsmodul darstellende Bauteilgruppe 2 weist neben den Funktionalitäten des Überrollschutzsystems 11, der Durchladeöffnung 60 und Sitzanbindung zudem ein Rückhaltegurtsystem 100 auf, welches zusammen mit den übrigen Komponenten des Multifunktionsmoduls in seiner vorgeschlagenen Kompaktbauweise separat außerhalb des Fahrzeugs komplettiert und in ein Fahrzeug zur Endmontage eingesetzt werden kann.

Bei der in den Fig. 6 bis Fig. 9 dargestellten Ausführungsvariante ist das Rückhaltegurtsystem 100 in das fahrzeugfeste erste Modul 4 des Überrollschutzsystems 11 bzw. dessen Führungseinrichtungen 30 integriert, wobei in mittlerer Höhe der Führungseinrichtungen 30 jeweils ein Gurtaufroller 110, 111 an sich bekannter Bauart in einen dem Überrollkörper 6 in Fahrzeugfrontrichtung vorgelagerten Profilbereich 35 der jeweils als Hohlprofil ausgebildeten Führungseinrichtungen 30 eingesetzt ist.

Von diesem Gurtaufroller 110, 111 ist der zugehörige Sicherheitsgurt 112 bzw. 113 in dem als Hohlprofil ausgeführten Profilbereich 35 zu einer oberen Sicherheitsgurtführung bzw. -umlenkung 114 bzw. 115 geführt. Von dort aus erstreckt sich der Sicherheitsgurt 112, 113 in Fahrzeugvorwärtsrichtung über eine dem Profilbereich 35 des Überrollschutzsystems 11 vorgelagerte Rücklehne eines Fahrzeugsitzes und kann in üblicher Weise mit einem Sicherheitsgurtschloss von einem Fahrzeuginsassen verbunden werden.

Des Weiteren umfasst das gezeigte Rückhaltegurtsystem 100 zwei obere Verankerungspunkte 120, 122 für einen Kindersitzhaltegurt, wobei die oberen Verankerungspunkte 120 bzw. 122 jeweils an einer dem Fahrzeuginnenraum 13 abgewandten Profilwand 46 des Querträgers 40 befestigt sind und eine Lasche 124 bzw. 126 aufweisen, durch die ein an einem Kindersitz befestigter Gurt gezogen oder darin eingehakt werden kann. Somit bildet der obere Verankerungspunkt 120 bzw. 122 für einen Kindersitz, welcher üblicherweise an zwei Befestigungspunkten im Sitzbankbereich fixiert ist, einen dritten Befestigungspunkt.

Hinsichtlich der Funktionsweise entspricht das Überrollschutzsystem 11 der Bauteilgruppe 2 dem der ersten Bauteilgruppe 1.

Im Unterschied hierzu weist die zweite Bauteilgruppe 2 eine modifizierte Halteeinrichtung 210 für den Überrollbügel 6 auf. Die zentral an dem Querträger 40 angeordnete Halteeinrichtung 210 umfasst ein um eine feste Drehachse schwenkbar gelagertes Verriegelungselement 214, welches zum Zusammenwirken mit einem hakenförmigen Verriegelungselement-Gegenkörper 218 an dem Überrollbügel 6 ausgelegt ist.

Das Verrieglungselement 214 ist mittels eines Aktuators 224 außer Eingriff mit dem hakenförmigen Verriegelungselement-Gegenkörper 218 schwenkbar, wobei der Aktuator 224 bei einer von einer Sicherheitssensorik des Cabriolet-Fahrzeugs erkannten Unfallsituation von einem zugeordneten Steuergerät angesteuert wird und im Crash-Fall eine Zustandsänderung erfährt, welche eine Bewegung des Verrieglungselements 214 zur Folge hat.

Der Aktuator 224 ist vorliegend als ein elektromagnetischer Aktuator üblicher Bauweise ausgebildet, jedoch eignen sich auch nach einem anderen Wirkprinzip arbeitende Aktuatoren, wie z. B. piezoelektrische Aktuatoren, pyrotechnische Aktuatoren oder mit einem Schmelzeinsatz ausgestattete Aktuatoren, zur Anwendung bei der Halteeinrichtung 210.

Die Verrieglungsvorrichtung 500 zum Arretieren des Überrollbügels 6 in Stützstellung ist bei der Ausführung nach Fig. 6 bis Fig. 9 gegenüber der Ausführung nach Fig. 1 bis Fig. 5 nur geringfügig modifiziert, weshalb in der nachfolgenden Beschreibung im Wesentlichen auf die Unterschiede eingegangen wird und im Übrigen auf die vorstehende Beschreibung verwiesen wird.

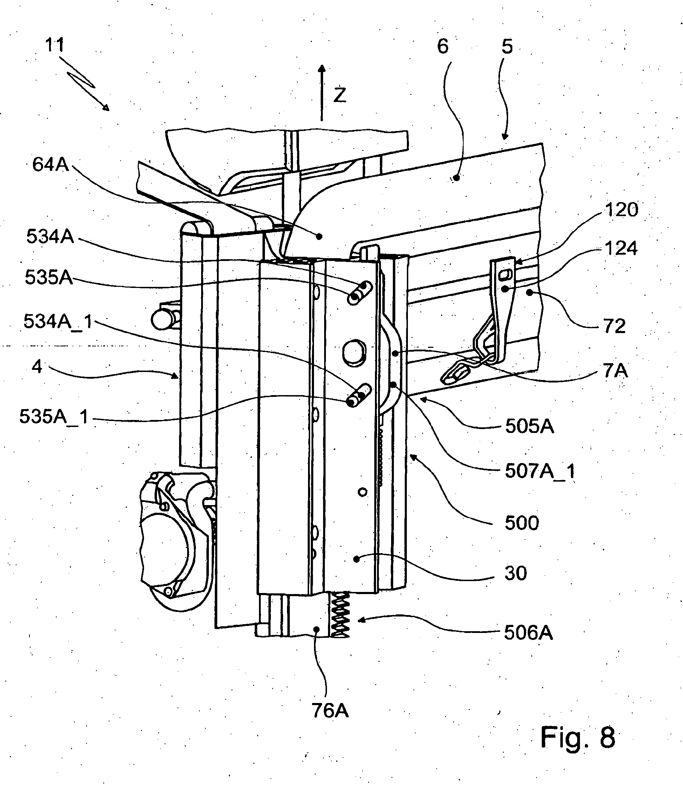

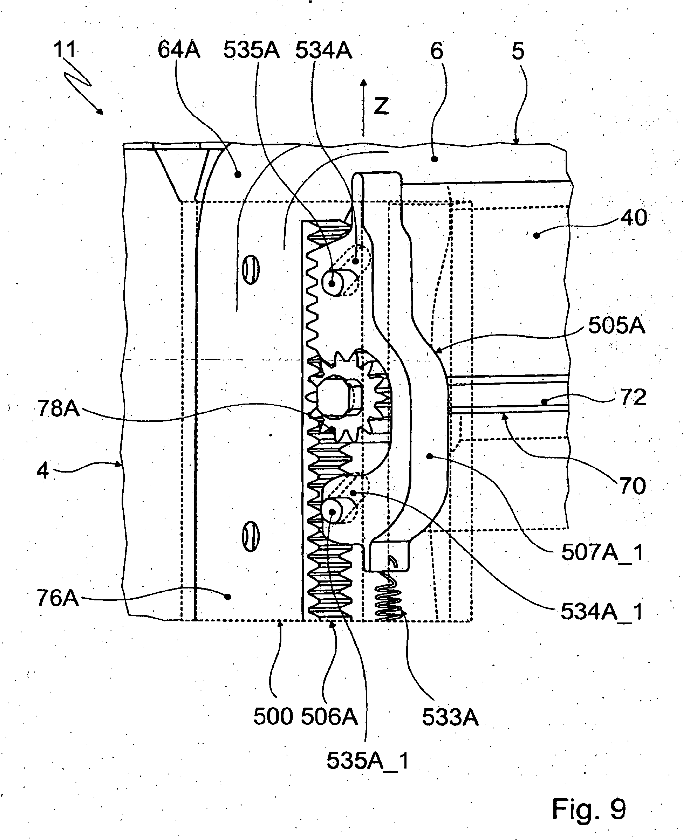

Das in Fig. 8 und Fig. 9 dargestellte Rastelement 507A der ersten Rasteinrichtung 505A entspricht in einem in Ausfahrrichtung Z oberhalb des Zahnrades 78A angeordneten Bereich im Wesentlichen dem Rastelement 507A des ersten Ausführungsbeispiels des Überrollschutzsystems 11. An diesen oberen Bereich schließt sich ein weiterer bügelartig ausgebildeter Rastelementbereich 507A 1 an, der das Zahnrad 78A der Synchronisationseinrichtung 70 halbbogenförmig umgreift und mit einem weiteren Führungselement 535A_1 in eine weitere Steuerkurve 534A 1 eingreift, so dass das Rastelement 507A in Bezug auf die Ausfahrrichtung Z des Überrollbügels 6 sowohl oberhalb als auch unterhalb des Zahnrades 78A in die Steuerbahnen 534A und 534A_1 gesteuert in und außer Eingriff mit der Rastleiste 76A führbar ist.

Die Federeinrichtung 533A ist vorliegend als Zugfeder ausgeführt, welche an einem dem Zahnrad 78A abgewandten Ende des bügelförmigen Bereichs 507A_1 des Rastelementes 507A angreift. Die Kraftwirkungsrichtung der Federeinrichtung 533A an dem Rastelement 507A ist vorliegend der Ausfahrrichtung Z des Überrollbügels 6 entgegengerichtet, so dass das Rastelement 507A in derselben Art und Weise wie das Rastelement 507A des ersten Ausführungsbeispiels des Überrollschutzsystems 11 in Abhängigkeit einer Rotation der Synchronisationswelle 72 in Eingriff oder aus dem Eingriff mit der Rastleiste 76A führbar ist und die Verriegelungsvorrichtung 500 in einen verriegelten oder einen entriegelten Betriebszustand überführt wird.

Damit das zweite Modul 5 von seiner Stützlage, in der das zweite Modul 5 mit seinem Überrollbügel 6 einen Sitzbereich eines oder mehrerer Fahrzeuginsassen derart überragt, dass für die Fahrzeuginsassen bei einem Fahrzeugüberschlag durch das Schutzelement in an sich bekannter Art und Weise ein Überlebensraum gewährleistet ist, wieder in seine Ruhelage, in der das zweite Modul 5 vorzugsweise in Bezug auf eine Rückenlehne eines Fahrzeugsitzes derart abgesenkt ist, dass das zweite Modul 5 die Rücksitzlehne nicht überragt, wieder absenkbar ist, ist die Wirkverbindung zwischen den Rasteinrichtungen 505 und 506 zur gewollten Absenkbewegung des zweiten Moduls 5 in Richtung seiner Ruhelage beispielsweise durch ein geeignetes Löseelement wieder aufhebbar.

Die Fig. 10 zeigt eine Modifikation der Verriegelungsvorrichtung 500 gemäß der Ausführung nach Fig. 6 bis Fig. 9, wobei eine sogenannte Doppelfeder-Ansteuerung des Rastelementes 507A der ersten Rasteinrichtung 505A vorgesehen ist. Das Rastelement 507A, welches in Abhängigkeit einer Rotation der Synchronisationswelle 72 in Eingriff oder aus dem Eingriff mit der Rastleiste 76A führbar ist, ist bei der Ausführung gemäß Fig. 10 sehr kompakt ausgebildet und in Ausfahrrichtung des Überrollkörpers 6 mit einer Doppelfeder 536 abgestützt, welche eine Linkswendelung und eine Rechtswendelung zum Vermeiden eines Verhakens aufweist. In Richtung Fahrzeugboden ist das Rastelement 507A über eine formschlüssig am Umfang des Rastelementes 507A angeordnete Blattfeder 538 mit dem Zahnrad 78A der Synchronisationswelle 72 verbunden, wobei eine Ansteuerung der Rasten durch das Zahnrad 78A über die Blattfeder 538 erfolgen kann. So besteht bei einem Toleranz bedingten frühzeitigen Fehleingriff des Rastelementes 507A in einem oberen Bereich eine Ausweichmöglichkeit durch die Blattfeder 538, durch die ein Absenken des Rastelementes 507A bis zur Anlage der Rastbolzen im tiefsten Punkt der Steuerkurven möglich ist. Zudem ermöglicht die Blattfeder 538 eine bessere Lastverteilung auf das Zahnrad 78A der Synchronisationswelle 72.

Weiterhin weist das Rastelement 507A gemäß der Ausführung der Fig. 10 an seinem der Rastleiste 76A abgewandten Umfangsbereich eine Ausnehmung 539 auf, in die leicht mit einem Montagewerkzeug durch eine seitliche Öffnung eines die Verriegelungsvorrichtung umgebenden Gehäuses eingegriffen werden kann, womit das Rastelement 507A zur Montageerleichterung und Reversierung des Überrollschutzsystems besonders einfach aus Eingriff mit der Rastleiste 76A bringbar ist.

In weiterer Ausführung kann zur Vermeidung von Klappergeräuschen im Bereich der Verriegelungsvorrichtung vorgesehen sein, dass die Blattfeder jeweils seitlich des Rastelementes mit Laschen ausgebildet ist, welche sich in Richtung des Zahnrades der Synchronisationswelle erstrecken und dieses seitlich einfassen.

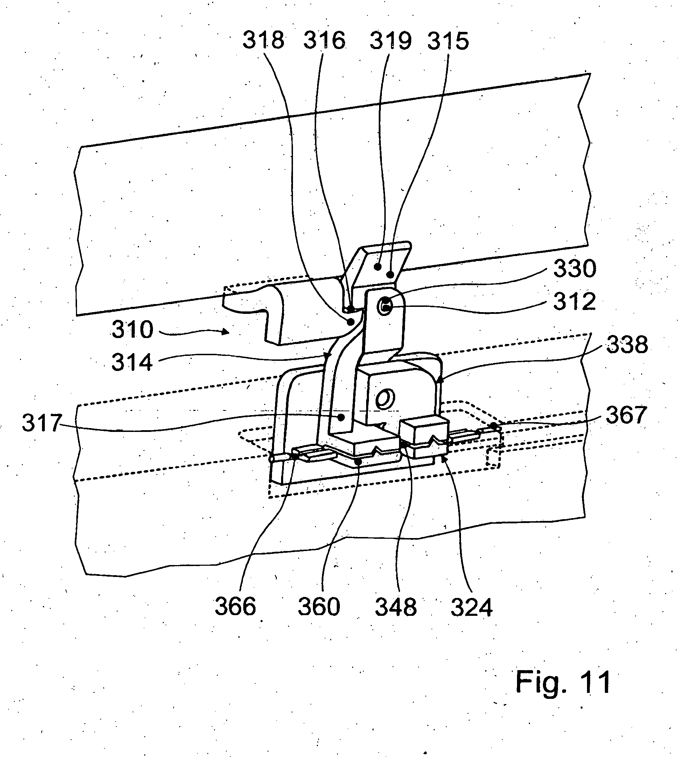

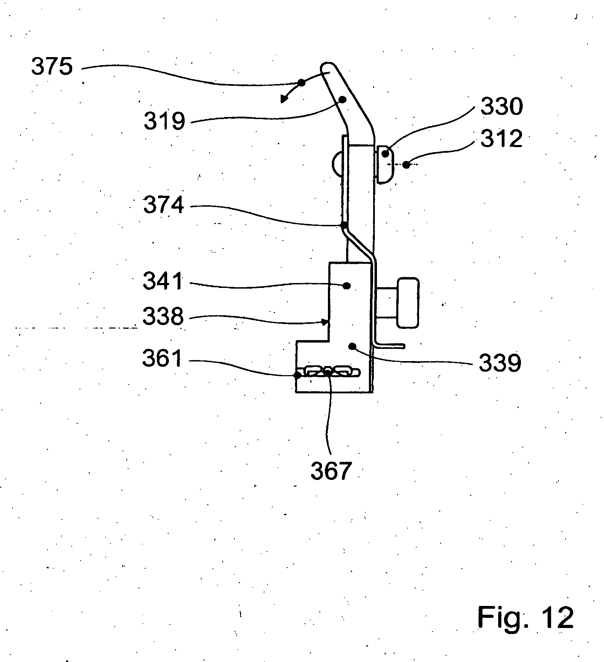

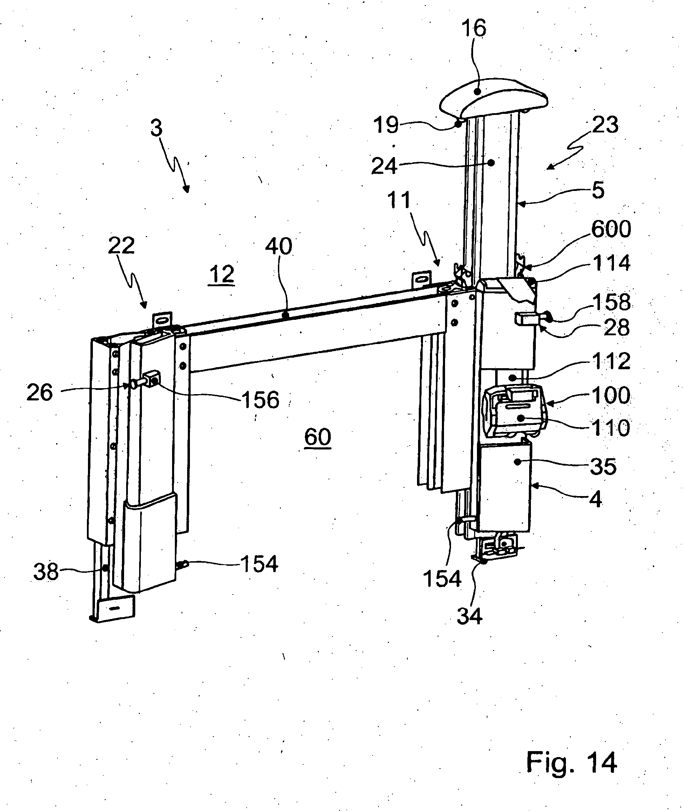

Die Fig. 11 und Fig. 12 zeigen in vereinfachter Darstellung die mit einem Schmelzeinsatz 348 ausgestattete Halteeinrichtung 310 zum Halten des Überrollkörpers 6 der gemäß der Ausführung des Überrollschutzsystems 11 nach Fig. 1 bis Fig. 5, welches jedoch auch für das Überrollschutzsystem gemäß Fig. 6 bis Fig. 9 geeignet ist und nahezu identisch in der Ausführung nach Fig. 14 ff Anwendung findet.

Die Halteeinrichtung 310 umfasst ein um eine feste Drehachse 312 schwenkbar gelagertes Verriegelungselement 314, welches an seinem Umfang einen Klinkenabschnitt 316 aufweist, welcher als U-Ausnehmung ausgebildet ist und zum Zusammenwirken mit einem Verriegelungselement-Gegenkörper 318 an dem Überrollbügel 6 ausgelegt ist.

Der Verriegelungselement-Gegenkörper kann hier in einfacher Weise als eine Haltelasche unterhalb einer Ausnehmung an dem Überrollbügel 6 oder auch als ein Bolzen, ein Absatz an dem Überrollkörper, oder ein geeignetes Hakenelement, ausgebildet sein.

Bei der Ausführung gemäß Fig. 11 und Fig. 12 ist der Verriegelungselement-Gegenkörper 318 als ein Hakenelement, welches an einem unteren Rand des Überrollbügels 6 befestigt ist, ausgebildet. Das Hakenelement 318 und der Klinkenabschnitt 316 des Verriegelungselements 314 sind derart aufeinander abgestimmt gestaltet, dass das Verriegelungselement 314 bei einer Rotation um dessen Drehachse 312 ohne Weiteres aus Eingriff mit dem Verriegelungselement-Gegenkörper 318 gebracht werden kann.

Der Überrollbügel 6 ist in seiner abgesenkten Ruhelage durch den Eingriff des Verriegelungselements 314 mit dem Verriegelungselement-Gegenkörper 318 gehalten, und kann durch Betätigung eines Aktuators 324 ausgelöst werden, indem der Aktuator 324 eine zumindest bereichsweise Rotation des Verriegelungselements 314 zulässt, so dass dieses außer Eingriff mit dem Verriegelungselement-Gegenkörper 318 gerät.

Bei der Ausgestaltung gemäß Fig. 11 und Fig. 12 ist das Verriegelungselement 314 durch einen im Crash-Fall aufschmelzbaren Schmelzeinsatz 348 des Aktuators 324 in seiner den Überrollbügel 6 verriegelnden Ruhestellung gehalten, wobei das Verriegelungselement 314 in Ruheposition radial und auf Zug belastet über den Schmelzeinsatz 348 mit einem Grundkörper 338 verbunden ist.

Das Verriegelungselement 314 ist bei diesem Ausführungsbeispiel hebelartig als eine Art Schwenkhebel ausgebildet. Dabei weist ein Hebelende 315 den Klinkenabschnitt 316 zum Eingriff mit dem Verriegelungselement-Gegenkörper 318 und das andere Hebelende 317 eine Halterung 360 für den mit einer Energiezuführeinrichtung 366 verbundenen Schmelzeinsatz 348 auf.

Der Grundkörper 338 ist ein Blockelement mit einem im Wesentlichen L-förmigen Querschnitt, wobei ein L-Schenkel 339 eine Halterung 361 für den Schmelzeinsatz 348 mit einer Energiezuführeinrichtung 367 aufweist und der andere L-Schenkel 341 eine Lagerung 374 des schwenkbaren Verriegelungselements 314 mit dessen Lagerbolzen 330 trägt.

Die Lagerung 374 stellt ein mit dem L-Schenkel 341 des Grundkörpers 338 verdrehsicher verschraubtes Lagerblech dar, welches auf einer Seite des Grundkörpers 338 aufliegend mit diesem verschraubt ist und entgegen der Lagerung des Bolzens 330 des Verriegelungselements 314 S-förmig gebogt ist, so dass das Verriegelungselement 314, das Lagerblech 374 und der Lagerbolzen 330 in Axialrichtung des Lagerbolzens 330 eine Erstreckung aufweisen, welche im Wesentlichen der Tiefe des sich mit dieser Baugruppe axial überdeckenden Grundkörpers 338 entspricht. Somit weist die Halteeinrichtung 310 vorteilhafterweise eine sehr geringe Bautiefe auf.

Die Halterungen 360, 361 für den Schmelzeinsatz 348 sind hier als Nuten ausgebildet, in die der vorliegend plattenförmige Schmelzeinsatz 348 fest arretiert eingesetzt ist. Der Schmelzeinsatz 348 kann zur Arretierung eine auf die ihn haltenden Nuten abgestimmte Formgebung und zur schnelleren Aufschmelzbarkeit in seinem mittleren Bereich eine Querschnittsverengung aufweisen.

Die Energiezuführeinrichtung 367 zum Erzeugen der zum Schmelzen des Schmelzeinsatzes 348 notwendigen Hitze ist zweckmäßig mittels an eine Stromquelle angeschlossener, an den Enden des Schmelzeinsatzes 348 befestigter Klemmen ausgeführt.

Das Material des Schmelzeinsatzes kann jedes für Schmelzsicherungen bekannte Material aus Metall und/oder Kunststoff darstellen.

Bei einem Schmelzen und Durchtrennen des Schmelzeinsatzes 348 infolge der Stromzufuhr, welche von einem Steuergerät bei einer erkannten Crash-Situation eingestellt wird, wird der vorgespannte Überrollbügel 6 von dem Verriegelungselement 314 freigegeben, indem das Verriegelungselement 314 wegen der Zugbelastung seitens des ausfahrenden Überrollbügels 6 verschwenkt wird, wobei der Klinkenabschnitt 316 außer Eingriff mit dem Absatz 318 gerät.

Die Reversierung des Überrollschutzsystems mit einer Rückführung des ausgefahrenen Überrollbügels 6 in dessen abgesenkte Ruheposition kann bei dem Ausführungsbeispiel gemäß Fig. 11 und Fig. 12 auf einfache Weise durch ein Absenken des Überrollbügels 6 in seine Ruheposition erfolgen, wobei der Überrollbügel 6 zunächst auf eine besonders deutlich in Fig. 12 ersichtliche, an der Oberkante des dem Überrollbügel 6 zugewandten Hebelendes 315 ausgebildete, in Axialrichtung des Lagerbolzens 330 des Verriegelungselements 314 verlaufende Schräge 319 des Verriegelungselements 314 trifft.

Das Verriegelungselement 314 ist zumindest abschnittsweise derart biegsam ausgebildet, dass der sich abwärts bewegende Überrollbügel 6 bei einem Gleiten entlang der Schräge 319 mit dem Absatz 318 das Verriegelungselement 314 in Richtung des in Fig. 12 ersichtlichen Pfeils 375 auslenkt bzw. wegbiegt, bis der Klinkenabschnitt 316 einrastet und den Überrollbügel 6 hält.

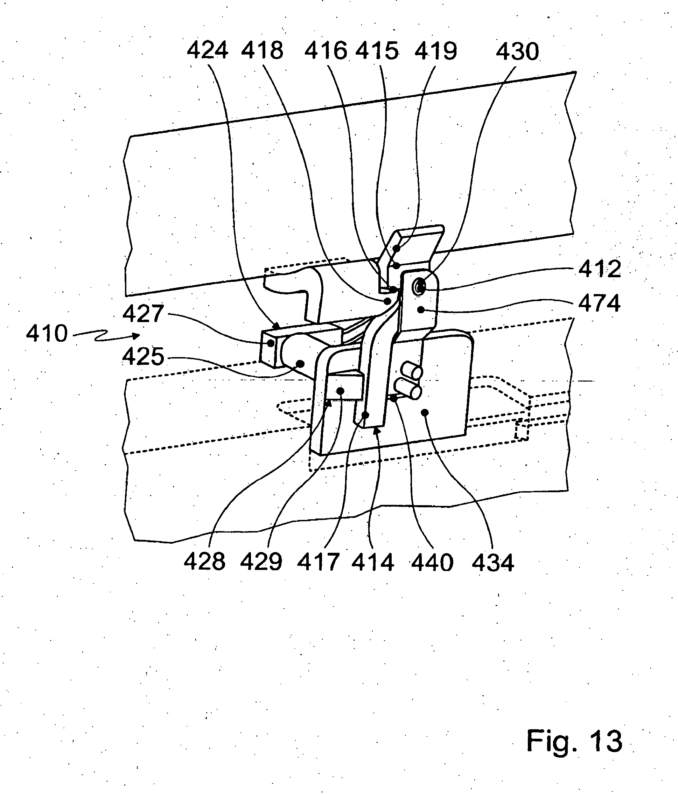

Die Fig. 13 zeigt in vereinfachter Darstellung eine weitere Ausführungsform einer Halteeinrichtung 410 zum Halten des Überrollbügels 6, welche hinsichtlich des Verriegelungselements der insbesondere in den Fig. 11 und Fig. 12 gezeigten Ausführung entspricht, jedoch pyrotechnisch antreibbar ist und alternativ zu der in den Fig. 11 bis Fig. 12 gezeigten Halteeinrichtung 310 verwendet werden kann.

Wie die zuvor beschriebenen Halteeinrichtungen umfasst auch die Halteeinrichtung 410 ein um eine feste Drehachse 412 schwenkbar gelagertes Verriegelungselement 414, welches im Wesentlichen wie das Verriegelungselement 314 der in den Fig. 11 und Fig. 12 gezeigten Halteeinrichtung 310 an seinem Umfang mit einem Klinkenabschnitt 416 ausgebildet ist und welches mit einem Verriegelungselement-Gegenkörper 418 an dem Überrollbügel 6 zusammenwirkt. Der Verriegelungselement-Gegenkörper 418 ist auch bei dieser Ausführung als ein Absatz eines Hakenelements, das an dem unteren Rand des Überrollbügels 6 befestigt ist, ausgebildet.

Zum Auslösen des Überrollbügels 6 muss das Verriegelungselement 414 aus einer in Fig. 13 gezeigten Ruhestellung, in welcher sich das Verriegelungselement 414 in Eingriff mit dem Verriegelungselement-Gegenkörper 418 befindet, in eine verschwenkte Position überführt werden, in der das Verriegelungselement 414 den Überrollkörper 6 freigibt.

Das Verriegelungselement 414 ist in der Art eines Schwenkhebels ausgebildet, wobei ein Hebelende 415 den Klinkenabschnitt 416 zum Eingriff mit dem Verriegelungselement-Gegenkörper 418 und das andere Hebelende 417 seitlich an einem Anschlagelement 428 anliegt, welches ein Widerlager für die seitens des Überrollkörpers 6 auf das Verriegelungselement 414 ausgeübte Kraft bildet und eine Rotation des Verriegelungselements 414 verhindert.

Zur Lagerung des Verriegelungselements 414 an dem ersten, karosseriefesten Modul 4 des Überrollschutzsystems ist ein mit einem an dem Querbalken 40 gehaltenen Trägerblech 434 verschraubtes Lagerblech 474 vorgesehen, welches auf einer Seite des Trägerblechs 434 anliegt und durch eine Lasche 440 hierin geführt ist sowie an seinem anderen Ende einen Lagerbolzen 430 für das schwenkbare Verriegelungselement 414 trägt. Das Lagerblech 474 ist entgegen der Lagerung des Bolzens 430 S-förmig gebogt, womit das Verriegelungselement 414, das Lagerblech 474 und der Lagerbolzen 430 in Axialrichtung des Lagerbolzens 430 eine Überdeckung aufweisen und somit nur eine geringe Bautiefe benötigen.

Der Aktuator 424, welcher eine Verschwenkung des Verriegelungselements 414 bewirkt, weist vorliegend einen pyrotechnischen Treibsatz 425 auf. Der pyrotechnische Treibsatz 425 ist bei der gezeigten Ausführung auf der dem Anschlagelement 428 und dem Lagerblech 474 abgewandten Seite des Trägerblechs 434 derart angeordnet, dass seine Wirkrichtung im Wesentlichen lotrecht zur Schwenkrichtung des Verriegelungselements 414 ist.

Der pyrotechnische Treibsatz 425 treibt einen das Trägerblech 434 durchgreifenden Bolzen an, welcher derart angeordnet ist, dass er im Ruhezustand des Verriegelungselements 414 an diesem anliegt. Bei einer elektrischen Kontaktierung des pyrotechnischen Treibsatzes 425 mittels einer Zündeinrichtung 427 bei einem Crash-Signal wird der Bolzen durch den pyrotechnischen Treibsatz 425 soweit in Richtung des unteren Hebelendes 417 des Verriegelungselements 414 verschoben, dass das Verriegelungselement 414 mit seinem unteren Hebelende 417 über das Anschlagelement 428 gehoben wird. Aufgrund der an dem Überrollkörper 6 in Ausfahrrichtung anliegenden Kraft wird das Verriegelungselement 414 daraufhin verschwenkt, wobei es an einer Keilfläche 429 des Anschlagelements 428 in Richtung des Trägerblechs 434 gleitet.

Die Reversierung der Halteeinrichtung 410 zum Halten des wieder zurück verlagerten Überrollkörpers 6 in seiner Ruhelage kann dadurch erfolgen, dass bei einem zurückverlagerten Bolzen des pyrotechnischen Treibsatzes 425 eine Rückverschwenkung des Verriegelungselements 414 erfolgt, wobei der Überrollkörper 6 bei einer Verlagerung in seine Ruheposition auf eine an der Oberkante des oberen Hebelendes 415 des Verriegelungselements 414 ausgebildete, in Axialrichtung des Lagerbolzens 430 verlaufende Schräge 419 des Verriegelungselements 414 auftrifft. Eine gewisse Biegsamkeit des Verriegelungselements 414 ermöglicht bei einem Gleiten des Überrollbügels 6 entlang der Schräge 419 mit dem Verriegelungselement-Gegenkörper 418 eine Auslenkung des Verriegelungselements 414 in Axialrichtung seines Lagerbolzens 430, bis der Klinkenabschnitt 416 einrastet und den Überrollbügel 6 hält.

Die Fig. 14 bis Fig. 21 zeigen in vereinfachter Darstellung eine weitere Bauteilgruppe 3 eines Cabriolet-Fahrzeugs, wobei hier ein Überrollschutzsystem 11 vorgesehen ist, bei dem jedem der Fahrzeugsitze 26, 28 eine Überrollschutz-Vorrichtung 22 bzw. 23 zugeordnet ist, welche jeweils ein karosseriefestes erstes Modul 4 und ein zwischen einer abgesenkten Ruhelage und einer erhöhten Stützlage verfahrbares zweites Modul 5 mit einem Überrollkörper 24 aufweisen, wobei das zweite Modul 5 wiederum bei einer Verlagerungsbewegung an dem ersten Modul 4 geführt ist.

Des Weiteren weist jede Überrollschutz-Vorrichtung 22, 23 eine lösbare Halteeinrichtung 310 oder 410 zum Halten des zweiten Moduls 5 mit dem Überrollkörper 24 in seiner Ruhelage, eine Verriegelungsvorrichtung 600, mittels der das zweite Modul 5 in einer von seiner Ruhelage abweichenden Position gegen einen in Richtung der Ruhelage wirkenden Kraftangriff selbsttätig abstützbar ist, und ein Antriebssystem 50 mit einem Federkraftspeicher 52, mittels dem das zweite Modul 5 in seiner Ruheposition vorgespannt und im Bedarfsfall in Richtung seiner Stützlage verlagerbar ist, auf.

Der Überrollkörper 24 ist bei der hier gezeigten Ausführung jeweils stangenartig ausgeführt und weist in seinem Inneren einen axialen Aufnahmekanal 8 für den Federkraftspeicher 52 auf. Bei den Ausführungen nach Fig. 14 ff stellt der Überrollkörper 24 jeweils einen geraden Stangenkörper dar, wenngleich in weiteren Ausführungen gegebenenfalls auch eine Krümmung in seinem oberen Bereich vorgesehen sein kann.

Der Querschnitt des Überrollkörpers 24 ist jeweils im Wesentlichen rund, wobei die innere Querschnittskontur bei der Ausführung vorliegend oval ist. An der Außenkontur sind den runden Kernquerschnitt umgebende Abflachungen 7 und Stege 14 ausgeformt, wobei die Abflachungen 7 und die Stege 14 nicht nur der Versteifung, sondern auch einer Verdrehsicherung des Überrollkörpers 24 dienen und teilweise Bestandteil der jeweiligen Verriegelungsvorrichtung 600 des Überrollkörpers 24 sind.

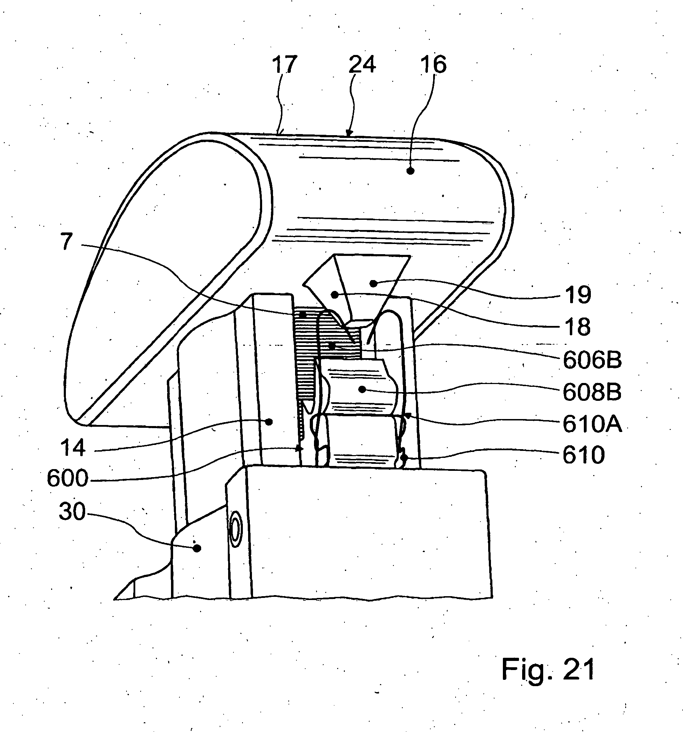

Bei der Ausführung nach Fig. 14 ff ist wie auch bei der Ausführung nach Fig. 6 bis Fig. 9 das als Führüngseinrichtung des Überrollkörpers 6 dienende, ein Rohrprofil darstellende Hohlprofil 30 mit seinem unteren Rand gegenüber dem Fußelement 34 des ersten Moduls 4 beabstandet angeordnet, wobei das Rohrprofil 30 in Ruhelage des Überrollbügels 6 bzw. des Überrollkörpers 24, welche in Fig. 21 gezeigt ist, einen oberen Endbereich des Überrollkörpers 6 bzw. 24 umgreift und in Stützlage des Überrollkörpers 6 bzw. 24, welche in Fig. 13 links anhand der Überrollschutz-Vorrichtung 23 gezeigt ist, den unteren Endbereich des Überrollkörpers 6 bzw. 24 aufnimmt.

Die Verbindung des Rohrprofils 30 mit dem Fußelement 34 des karosseriefesten Moduls 4 erfolgt bei den gezeigten Ausführungen jeweils über ein Verbindungsprofil 38, welches an der der Fahrzeugseite zugewandten Seite des Rohrprofils 30 in einen korrespondierend geformten Profilabschnitt 30 eingeführt und hiermit verschraubt ist.

Bei den gezeigten Ausführungen ist das Verbindungsprofil 38 wie die übrigen Profile des Überrollschutzsystems 11 als ein Strangpressprofil ausgeführt, wobei vorliegend für das Verbindungsprofil 38 ein U-Querschnitt gewählt ist. Hiervon abweichend kann jedoch auch jede andere Profilform eines offenen oder geschlossenen Profils für das Verbindungsprofil dem vorliegenden Anwendungsfall entsprechend gewählt werden, wobei die Wahl der Geometrie im Hinblick auf eine möglichst schlanke Bauweise des Überrollschutzsystems 11 vorzunehmen ist.

Bei der Ausführung nach Fig. 14 ff sind die Überrollschutz-Vorrichtungen 22, 23 zweier Fahrzeugsitze einer Sitzreihe jeweils in entgegengesetzter Richtung im Wesentlichen außermittig zu dem zugeordneten Fahrzeugsitz angeordnet, so dass zwischen den Überrollschutz-Vorrichtungen 22, 23 ausreichend Platz für eine großzügige Durchladeöffnung 60 gegeben ist, mittels der sperrige Güter von einem heckseitigen Aufnahmeraum bzw. Kofferraum 12 in den Fahrzeuginnenraum 11 geführt werden können.

Die Überrollschutz-Vorrichtungen 22, 23 sind auch hier jeweils mit einer nicht näher dargestellten, in üblicher Art und Weise ausgeführten Crash-Sensorik des Fahrzeugs verbunden, wobei hierdurch die Halteeinrichtung 310 oder 410 angesteuert wird, mittels der der betreffende Überrollkörper 24 entgegen der Kraft des Federkraftspeichers 52 in Ruhelage gehalten wird.

Bei Vorliegen eines Crash-Signals gibt die betreffende Halteeinrichtung 310, 410 den Überrollkörper 24 frei, so dass der Überrollkörper 24 durch die Kraft des Federkraftspeichers 52 in seine ausgefahrene obere Stützposition verlagert wird, in der er durch die Verriegelungseinrichtung 600 gegen ein Wiedereinfahren gesichert wird.

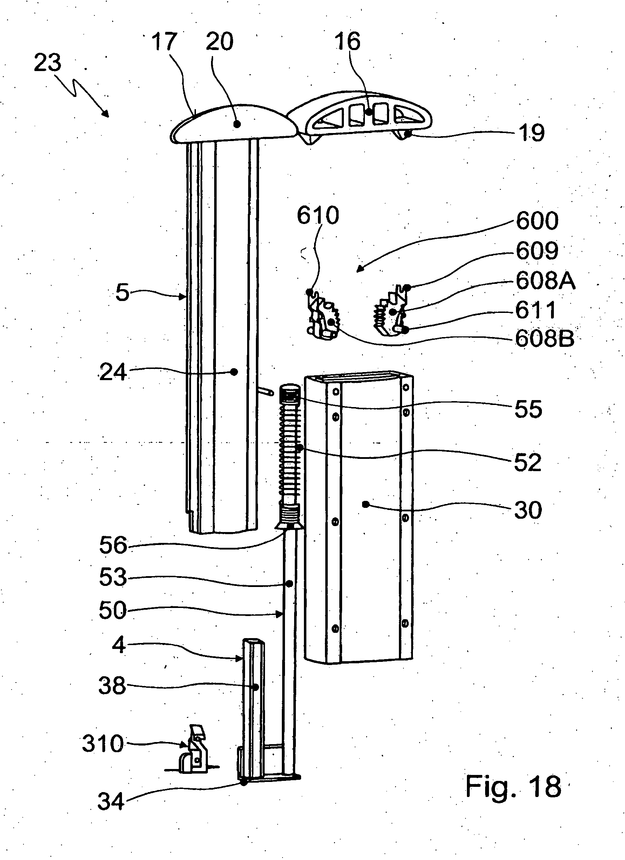

Um bei einem Fahrzeugüberschlag die dabei auftretenden Kräfte besser aufnehmen zu können, weist der Überrollkörper 24 an seinem oberen Ende jeweils ein Prallprofil 16 mit einer gegenüber der Querschnittsfläche des Überrollkörpers 24 vergrößerten Prallfläche 17 auf. Dieses Prallprofil, welches ein Einbohren des stangenartigen Überrollkörpers in den jeweils gegebenen Untergrund bei einem Fahrzeugüberschlag verhindert, ist vorliegend, wie insbesondere in Fig. 18 gezeigt ist, als ein Hohlprofil mit mehreren Hohlräumen ausgebildet, welches an seiner dem Karosserieboden abgewandten Oberfläche bzw. Prallfläche eine Krümmung aufweist. An den Seiten ist das Prallprofil 19 jeweils mit Blenden 20 geschlossen.

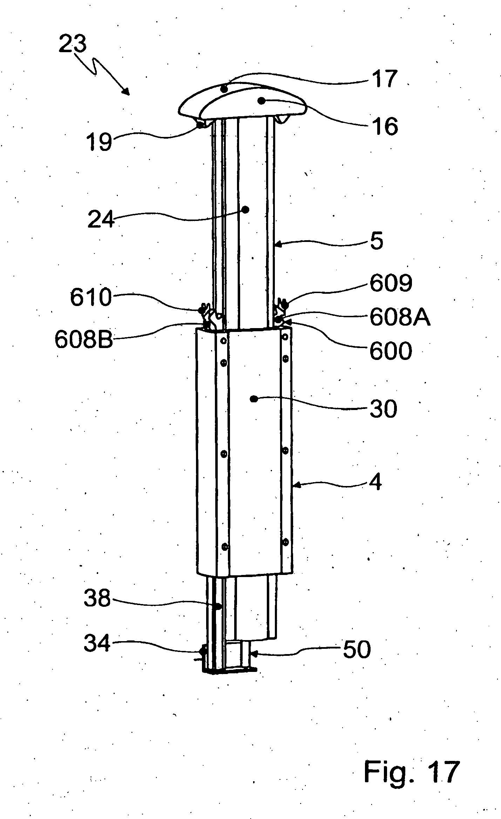

Die Fig. 17 und Fig. 18 zeigen näher die Ausführung der Überrollschutz-Vorrichtung 23, welche mit einer identischen Ausführung der korrespondierenden Überrollschutz-Vorrichtung 22 Teil der in den Fig. 14 ff gezeigten Bauteilgruppe 3 ist.

Wie in Fig. 18 deutlich zu sehen ist, ist bei der Ausführung nach Fig. 14 ff das Antriebssystem modifiziert. Der Federkraftspeicher 52 ist hier - im Unterschied zu dem in Fig. 2 gezeigten Antriebssystem 50 mit einer Druckfeder - als Zugfeder ausgebildet, welche in einem Aufnahmekanal 8 des Überrollkörpers 24 an einer Federführungsstange 53 geführt ist. An der Federführungsstange 53 ist an ihrem oberen Ende eine Federaufhängung 55 ausgebildet und an einem mittleren Bereich ein Federteller 56 verschieblich gelagert, wobei die Zugfeder 52 zwischen der Federaufhängung 55 und dem an einem Anschlag des Überrollkörpers 24 anliegenden Federteller 56 in Ruhelage des Überrollkörpers 24 auf Zug vorgespannt ist.

Weiterhin unterscheidet sich die Ausführung nach Fig. 14 ff von den zuvor beschriebenen Ausführungen hinsichtlich der verwendeten Verriegelungsvorrichtung 600 zum selbsttätigen Arretieren des ausgefahrenen Überrollkörpers 24 in seiner Stützposition.

Die Verriegelungsvorrichtung 600 weist wie die Verriegelungseinrichtung 500 wenigstens eine mit dem ersten Modul 4 fest verbundene erste Rasteinrichtung 605 auf, die zum Abstützen des zweiten Moduls 5 mit einer mit dem zweiten Modul 5 fest verbundenen zweiten Rasteinrichtung 606 in Wirkverbindung bringbar ist und die eine Bewegung des zweiten Moduls 5 ausgehend von seiner Ruhelage in Richtung seiner Stützlage zulässt.

Die erste Rasteinrichtung 605 der Verriegelungsvorrichtung 600 umfasst bei dem in Fig. 14 ff dargestellten Ausführungsbeispiel zwei in Richtung ihrer Wirkposition mit einer Kraft beaufschlagbare, karosseriefest drehbar gelagerte und jeweils mit einem Zahnprofil 607 ausgeführte Sperrkörper 608A, 608B.

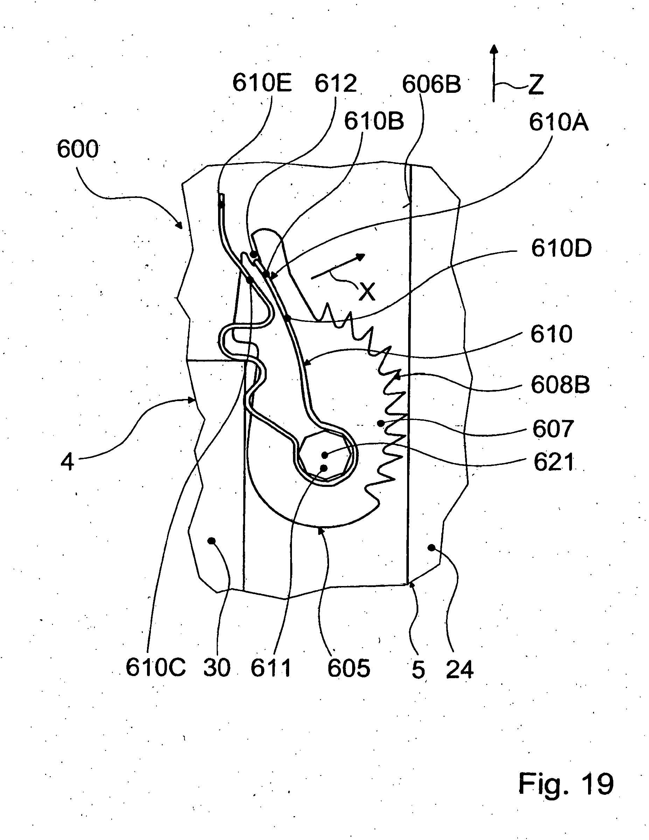

Jedem Sperrkörper 608A, 608B ist jeweils eine Federeinrichtung 609, 610 zugeordnet, über die die Sperrkörper 608A, 608B jeweils in Richtung der Wirkposition der ersten Rasteinrichtung 605 derart angefedert sind, dass die Sperrkörper 608A, 608B um Lagerbolzen aus der in Fig. 19 dargestellten Position jeweils in eine durch einen Pfeil X in Fig. 19 dargestellte Drehrichtung verschwenkt werden.

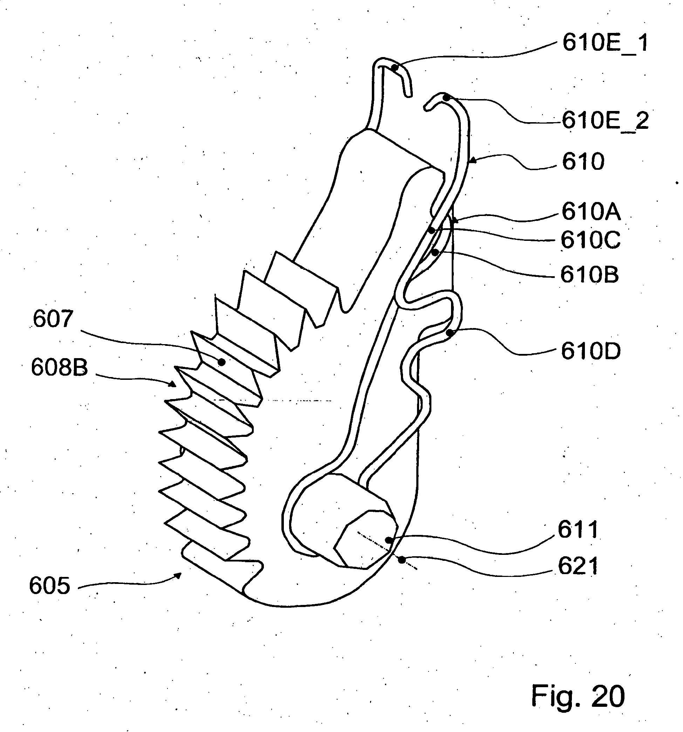

Die Lagerbolzen 611 sind vorliegend an dem karosseriefesten Modul 4 abgestützt, wobei die Sperrkörper 608A und 608B über die als Bügeldrahtfedern ausgebildeten Federeinrichtungen 609 und 610 in der in Fig. 19 und Fig. 20 näher dargestellten Art und Weise in axialer Erstreckung der Lagerbolzen 611 fixiert und somit eindeutig positioniert sind.

Dazu umgreifen die Federeinrichtungen 609 und 610 die Lagerbolzen 611 auf beiden Seiten der hier scheibenartig ausgeführten Sperrkörper 608A und 608B. Die Federeinrichtungen 609 und 610 sind im Umschlingungsbereich der Lagerbolzen 611 in Einbaulage vorgespannt, um die Reibungskraft zwischen den Federeinrichtungen 609 und 610 und den Lagerbolzen 611 auf einem derartigen Wert einzustellen, dass die Sperrkörper 608A und 608B auf den Lagerbolzen 611 nicht verschieblich sind.

Diese Ausführung führt im Vergleich zu einer Presspassung zwischen den Lagerbolzen und den Sperrkörpern zu einer Verringerung der Fertigungskosten und auch zu einer Vereinfachung der Montage, da im Bereich der Fügedurchmesser geringere Anforderung an die Fertigungstoleranzen gestellt sind und die Lagerbolzen mit geringerem fertigungstechnischen Aufwand mit den Sperrkörpern verbaubar sind. Des Weiteren führt die vorbeschriebene Arretierung der Sperrkörper 608A und 608B auf den Lagerbolzen 611 über die Federeinrichtungen 609 und 610 im Vergleich zu einer Sicherung der Sperrkörper auf den Lagerbolzen über separate Befestigungselemente ebenfalls zu einer Reduzierung der Herstellkosten und auch zu einer Vereinfachung der Montage, da bei der in Fig. 19 und Fig. 20 dargestellten Lösung die Teileanzahl gering ist und die Arretierung der Sperrkörper auf den Lagerbolzen in einem einzigen Montageschritt, bei dem die Federeinrichtungen 609 und 610 über die Lagerbolzen 611 geschoben und verrastet werden, hergestellt ist.

Die zweite Rasteinrichtung 606 ist vorliegend durch jeweils eine einem Sperrkörper 608A bzw. 608B zugewandte und gegenüber dem jeweils damit korrespondierenden Sperrkörper 608A bzw. 608B verfahrbare Oberfläche 606B des zweiten Moduls 5, bzw. Überrollkörpers 6 ausgebildet, mit der jeweils das Zahnprofil 607 eines Sperrkörpers 608A bzw. 608B in Wirkposition der ersten Rasteinrichtung 605 derart in Reibeingriff steht, dass eine Bewegung des zweiten Moduls 5 aus einer von der Ruhelage abweichenden Position in Richtung seiner Ruhelage verhindert ist.

Die den Sperrkörpern 608A und 608B jeweils zugeordneten Federeinrichtungen 609 und 610 sind jeweils mit Sperreinrichtungen 609A, 610A ausgebildet, wobei die Sperrkörper bei aktivierter Sperreinrichtung 610A in einer einen deaktivierten Zustand der ersten Rasteinrichtung 605 äquivalenten Position haltbar sind. Dazu sind die Bügeldrahtfedern 609 und 610 mit jeweils einem ersten Bügelbereich 610B ausgeführt, der zur Aktivierung der Sperreinrichtungen 610A mit einem zweiten Bügelbereich 610C in der in Fig. 20 dargestellten Art und Weise derart in Wirkverbindung bringbar ist, dass die Sperrkörper 608A und 6β8B in den dem deaktivierten Zustand der ersten Rasteinrichtung 605 äquivalenten Positionen, in welchen eine Relativbewegung zwischen dem ersten Modul 4 und dem zweiten Modul 5 durch die Verriegelungsvorrichtung 600 nicht verhindert wird, gehalten werden.

Die Bügeldrahtfedern 609 und 610 sind jeweils mit einem ersten Schenkel 610D, welcher im Wesentlichen U-förmig ausgebildet ist, in schlitzartige Ausnehmungen 612 der Sperrkörper 608A und 608B eingesetzt und liegen mit ihrem zweiten Schenkel 610E derart an dem karosseriefesten Modul 4 an, dass sich die Federeinrichtungen 609 und 610 in einer Vorspannlage befinden. Aufgrund dieser Vorspannung können die Sperrkörper 608A und 608B in deaktiviertem Zustand der Sperreinrichtungen 609A, 610A in ihren dem arretierenden Zustand der ersten Rasteinrichtung 605 äquivalenten Positionen um die Lagerbolzen 611 verschwenkt werden.

Die ersten Bügelbereiche 610B der Bügeldrahtfedern stellen jeweils einen sich an den Mittelbereich, d. h. die U-Traverse, der Bügeldrahtfedern, welcher in die schlitzartige Ausnehmung 612 der Sperrkörper eingelegt ist, anschließende Bereiche dar, in denen der erste Schenkel 610D der Bügeldrahtfedern mit einer größeren Breite ausgeführt ist als die zweiten Bügelbereiche 610C an deckungsgleichen Bereichen des zweiten, mit zwei offenen Bügeln ausgebildeten Schenkels 610E.

Die Schenkel 610D und 610E der Federeinrichtungen 609 und 610 bilden damit derart die Sperreinrichtungen 610A, dass sie sich in aktiviertem Zustand der Sperreinrichtungen 610A im Bereich der Bügelbereiche 610B und 610C hinterklemmend kreuzen, gegenseitig halten und aufgrund der inneren Vorspannung nicht aufspreizen können, wie es in Fig. 20 ersichtlich ist.

Zum Lösen bzw. Deaktivieren der Sperreinrichtungen 610A sind die Bügeldrahtfedern 609 und 610 im Bereich ihrer freien Enden mit in der in Fig. 20 näher dargestellten Art und Weise zueinander verschieblich ausgeführten Bügelenden 610E_1 und 610E_2 ausgeführt. Das bedeutet, dass die Sperreinrichtungen 610A jeweils dadurch deaktivierbar oder aktivierbar sind, dass der Abstand der Bügeldrahtenden der Federeinrichtungen 609 und 610 derart vergrößert wird, dass die Schenkelarme der Federeinrichtungen 609 und 610 im Bereich der Bügelbereiche 610B und 610C aneinander vorbeigeführt werden können.

Die Sperrkörper 608A und 608B sind dann entweder in der nichtsperrenden Stellung durch die Sperreinrichtung 610A gehalten oder zur Einstellung der Wirkposition der ersten Rasteinrichtung 605 freigegeben.

Wenn die Sperreinrichtung 610A der Federeinrichtung 610, die dem Sperrkörper 608B in Fig. 18 zugeordnet ist, deaktiviert ist, ist der Sperrkörper 608B von der Federeinrichtung 610 in eine dem Wirkzustand der ersten Rasteinrichtung 605 entsprechende Position um den Lagerbolzen 611 verschwenkt. In dieser Position des Sperrkörpers 608B wird zwar eine Ausfahrbewegung des zweiten Moduls 5 in Richtung seiner Stützlage von der ersten Rasteinrichtung 605 zugelassen, jedoch wird eine Bewegung des zweiten Moduls 5 in Richtung seiner Ruhelage durch eine Wirkverbindung zwischen dem Zahnprofil 607 des Sperrkörpers 608B und der zweiten Rasteinrichtung 606 wirkungsvoll verhindert.

Die Vorspannkraft der Federeinrichtungen 609 und 610 in Richtung der Wirkpositionen der Sperrkörper 608A und 608B ist vorliegend derart vorgesehen, dass eine Anlage der Sperrkörper 608A und 608B an der vorliegend als Oberfläche des Überrollkörpers 24 ausgebildeten Rasteinrichtung 606 eine Ausfahrbewegung nicht behindert. Die Zahnexzenter darstellenden Sperrkörper 608A und 608B werden bei der Ausfahrbewegung des Überrollkörpers 6 von diesem um die Lagerbolzen 611A entgegen der Drehrichtung X verschwenkt und bauen somit keine Sperrwirkung zwischen den beiden Rasteinrichtungen 605 und 606 auf.

Wenn der Sperrkörper 608B in seine Wirkposition verschwenkt wird, dringt der Sperrkörper 608B mit seinem der Verrastungsfläche 606B zugewandten Zahnprofil 607 wenigstens bereichsweise in die Verrastungsfläche 606B der Rasteinrichtung 606 ein, womit zwischen dem Sperrkörper 608B und dem Überrollkörper 24 ein Formschluss vorliegt und der Überrollkörper 24 sicher gegen eine Einfahrbewegung in Richtung seiner Ruhelage gehalten ist.

Bei der in den Fig. 14 ff gezeigten Ausführung ist die Zahngeometrie des Zahnprofils 607 mit spitz zulaufenden, messerartige Enden aufweisenden Zähnen ausgeführt und das Material für das Zahnprofil 607 gegenüber dem Material der Oberfläche des Überrollkörpers 24 härter, um eine zuverlässige Arretierung des Überrollkörpers 24 zu gewährleisten.

Während hier im Wesentlichen nur eine Verformung der von dem Sperrkörper kontaktierten Oberfläche vorgesehen ist, kann alternativ hierzu auch eine gegebenenfalls elastische Verformbarkeit des Zahnprofils vorgesehen sein.

Der Überrollkörper 24 ist an der Unterseite seines Prallprofils 16 mit Keilflächen 18 aufweisenden, vorliegend pyramidenstumpfartig ausgebildeten Entriegelungselementen 19 ausgebildet, mittels denen die Sperrkörper 608A, 608B nach einer Einfahrbewegung des Überrollkörpers 24 in Richtung seiner Ruhelage in Eingriff mit der zweiten Rasteinrichtung 606 gebracht werden.

Zur Reversierung in die Ausgangsposition bzw. Ruhelage des Überrollkörpers 24 werden die Sperrkörper 608A, 608B zurückgezogen, wobei sich die verbreiterten Bügelbereiche 610B der Federeinrichtungen 609 und 610 hinter den freien Bügelbereichen 610C verhaken und somit die Wirkung der Bügeldrahtfedern 609, 610 aufheben. Der Überrollkörper 24 kann damit in seine Ausgangsposition abgesenkt werden. Bei Erreichen der Ruhelage des Überrollkörpers 24 werden die freien Federenden 610E_1, 610E_2 über die vorgenannten Entriegelungselemente 19 des Überrollkörpers 24 auseinandergedrückt, so dass die Federeinrichtungen 609 und 610 die Zahnexzenter bzw. Sperrkörper 608A, 608B wieder an der Verrastungsfläche 606B des Überrollkörpers 24 zur Anlage bringen.

Zur Erhöhung der Rastkraft der Verriegelungsvorrichtung 600 sind die Verrastungsflächen 606B vorliegend mit einer Rändelung bzw. mit einer den Reibwert der Verrastungsflächen erhöhenden Profilierung ausgebildet.

Bei dem beschriebenen Ausführungsbeispiel sind die Sperrkörper jeweils an dem karosseriefesten ersten Modul gelagert, wobei jedoch auch eine umgekehrte Anordnung mit einer Lagerung an dem ausfahrbaren Modul und einem Reibeingriff an einer karosseriefesten Oberfläche vorgesehen sein kann.

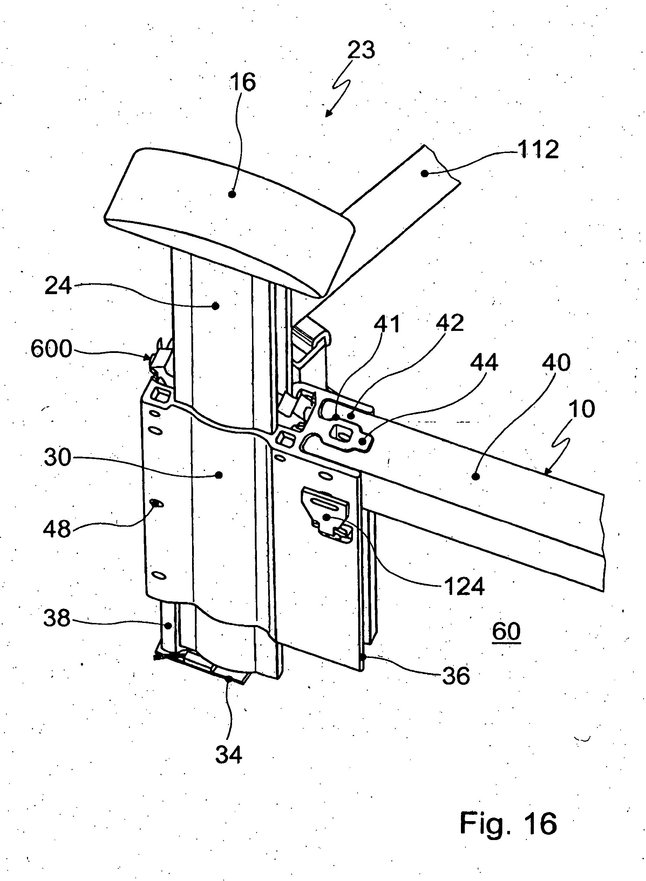

Auch bei der in den Fig. 14 ff gezeigten Ausführungsvariante wird die Querversteifungsstruktur 10 mit der Durchlade 60 im Wesenlichen durch den Querträger 40 gebildet. Wie insbesondere der Fig. 16 zu entnehmen ist, sind die Enden des Querträgers 40 bei dieser Ausführung jeweils mit einem Hinterschneidungen 41 aufweisenden Profil 42 ausgebildet, welches hinsichtlich seiner Formgebung mit einem Profil 44 des Rohrprofils 30 des karosseriefesten ersten Moduls 4 korrespondiert. Dabei sind die Profile 42 und 44 W- bzw. U-förmig derart zueinander gestaltet, dass der Querträger 40 mit seinem U-Profil 42 in das W-Profil 44 des Rohrprofils 30 eingesetzt werden kann, womit der Querträger 40 formschlüssig in das Rohrprofil 30 eingeklemmt ist und gegebenenfalls durch Schraubverbindungen zusätzlich gesichert werden kann.

Der Querträger 40 bildet somit eine vormontierbare Einheit mit den Überrollschutz-Vorrichtungen 22, 23, welche über seitliche Bohrungen 48 mit dem Fahrzeugaufbau verschraubt werden kann.

Bei der in den Fig. 14 ff dargestellten Ausführungsvariante ist das fahrzeugfeste erste Modul 4 der jeweiligen Überrollschutz-Vorrichtung 22, 23 jeweils ebenfalls mit einem integrierten Rückhaltegurtsystem 100 ausgebildet, wobei in mittlerer Höhe des Rohrprofils 30 ein Gurtaufroller 110 in einen dem Überrollkörper 24 in Fahrzeugfrontrichtung vorgelagerten Profilbereich 35 des fahrzeugfesten Rohrprofils 30 eingesetzt ist. Von diesem Gurtaufroller 110 ist der Sicherheitsgurt 112 in dem als Hohlprofil ausgeführten Profilbereich 35 zu einer oberen Sicherheitsgurtführung bzw. -umlenkung 114 und von dort in den Insassenraum 11 geführt.

Wie bei der Ausführung nach Fig. 6 bis Fig. 9 umfasst das Rückhaltegurtsystem 100 zwei obere Verankerungspunkte 120, 122 für einen Kindersitzhaltegurt, wobei jeweils einer der oberen Verankerungspunkte 120 bzw. 122 einer Überrollschutz-Vorrichtung 22 bzw. 23 zugeordnet ist.

Die Bauteilgruppe 3 gemäß Fig. 14 ff weist darüber hinaus Sitzelemente auf, wobei die Überrollschutz-Vorrichtungen 22, 23 jeweils eine Sitzanbindungseinrichtung in Form von unteren Sitzlehnenlagern 152, 154 und oberen Sitzlehnenverriegelungsbolzen 156, 158 für einen ersten Fahrzeugsitz 26 und einen zweiten Fahrzeugsitz 28 einer Sitzreihe, welche vorliegend Fond-Sitze darstellen, auf.

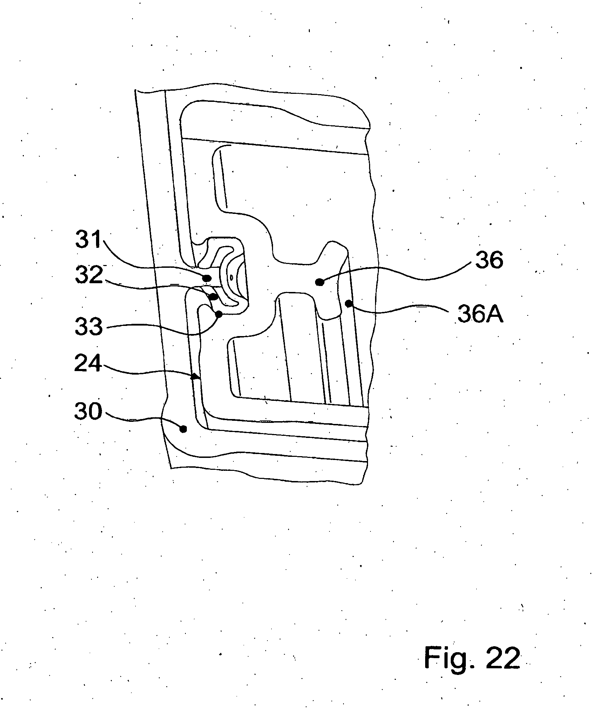

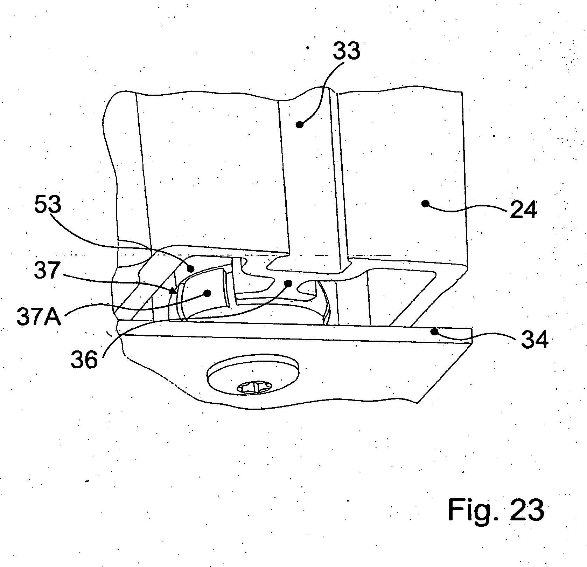

Die Fig. 22 und Fig. 23 zeigen konstruktive Maßnahmen zum Verhindern von Klappergeräuschen des Überrollkörpers 24 in der als Rohrprofil ausgebildeten Führungseinrichtung 30 in der abgesenkten Bereitschaftsposition des Überrollkörpers 24. Wenngleich diese konstruktive Maßnahmen vorliegend im Zusammenhang mit der Bauteilgruppe 3 beschrieben sind, können diese selbstverständlich auch bei den Bauteilgruppen 1 und 2 Anwendung finden.

Wie der Fig. 22 zu entnehmen ist, kann die Führungseinrichtung an ihrer inneren, dem Überrollkörper 24 zugewandten Wandung mit einem vorspringenden, in Ausfahrrichtung des Überrollkörpers 24 verlaufenden Steg 31 ausgebildet sein, welche von einem an dem Überrollkörper 24 in einer korrespondierenden Umfangsstelle gehaltenen, elastischen Zentrierelement 32 umgriffen wird. Bei der gezeigten Darstellung ist das klippartig ausgebildete Zentrierelement 32 in eine umfangsseitigen Ausnehmung 33 an dem Überrollkörper 24 eingesetzt, wobei die Anordnung des Zentrierelementes 32 an einem oberen Ende des Überrollkörpers 24 unterhalb des Prallprofiles 16 erfolgt. Gegenüber der Feder 52 des Antriebssystems 50 ist der Überrollkörper 24 mit vier bis an den Umfang der Feder 52 reichenden Stegen 36 ausgebildet, deren Wandung 36A eine vierflächige Federführung bilden.

Eine konstruktive Maßnahme zur Zentrierung des Überrollkörpers 24 in seinem unteren Anlagebereich ist in Fig. 23 gezeigt, wobei hieraus ersichtlich wird, dass um einen Fuß der Federführungsstange 53 eine Zentrierkrone 37 mit federartig abstehenden Materialfahnen 37A an deren Umfang vorgesehen ist, wobei die federnden Materialfahnen 37A in Ruhezustand des Überrollkörpers 24 an den Federführungsstegen 36 anliegen und somit eine klapperfreie Lagerung des Überrollkörpers 24 auch an seinem unteren Ende in Ruheposition gewährleisten.

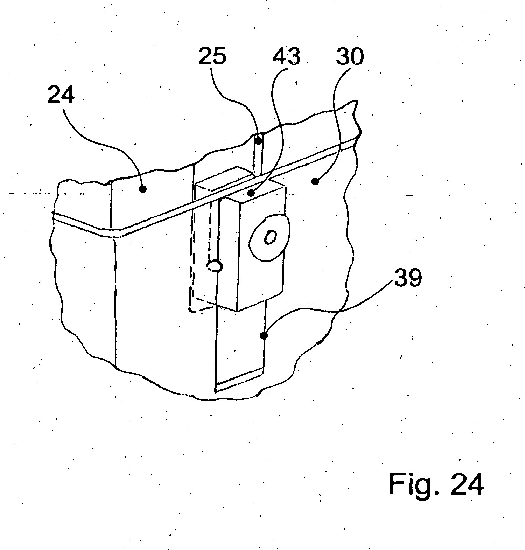

Die Fig. 24 zeigt weiterhin eine vorteilhafte Ausgestaltungsmöglichkeit eines Höhenanschlages 43 für den Überrollkörper 24 an der rohrprofilförmigen Führungseinrichtung 30. Dabei ist der Höhenanschlag 43 als ein U-förmiges Anschlagelement ausgebildet, welches im Bereich eines Durchbruchs 39 durch die Wandung des Rohrprofils 30 angeordnet ist und mit den U-Schenkeln die Wandstärke des Rohrprofils 30 umgreifen in Ausfahrrichtung des Überrollkörpers 24 auf die Wandung des Seitenprofils 30 aufgesteckt ist. Durch eine Schraube 44 erfolgt eine Verklemmung des Höhenanschlags 43 mit der Wandung des Rohrprofils 30.

Der Überrollkörper 24 kann zum Anschlag an dem Höhenanschlag 43 in einfacher Weise ebenfalls mit einer Ausnehmung 25 ausgebildet sein.

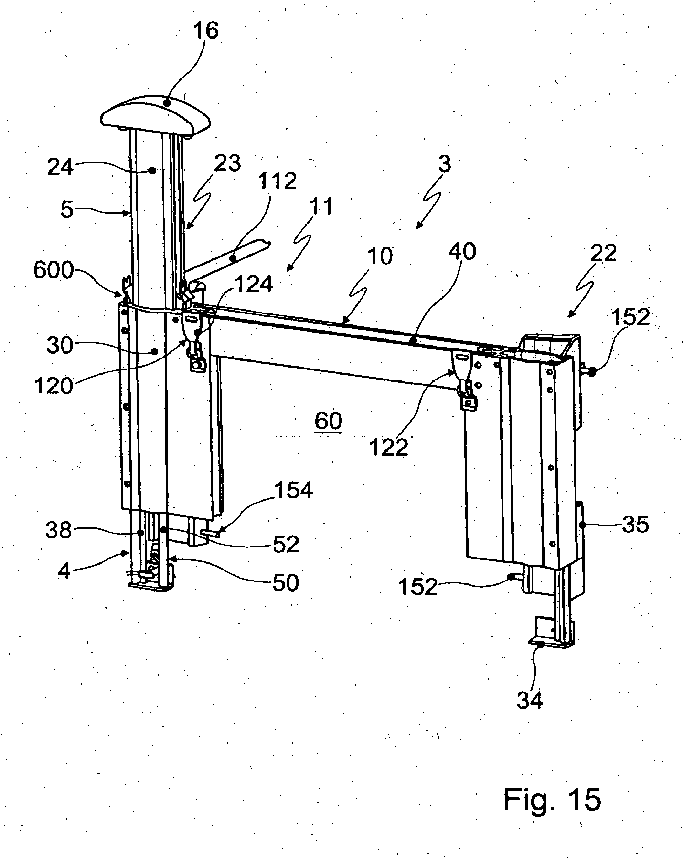

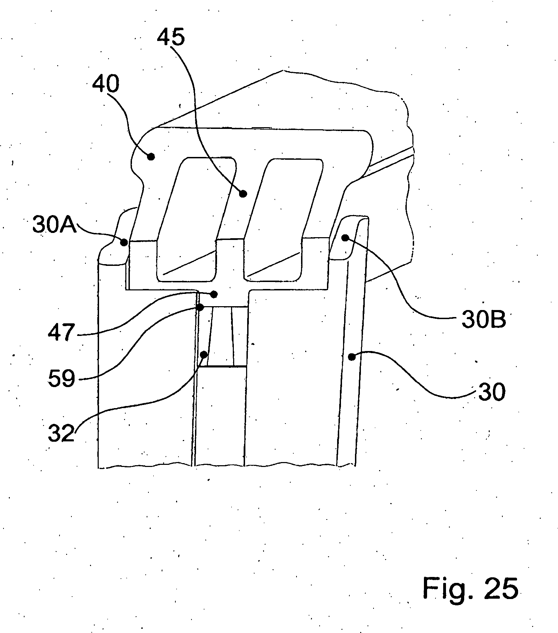

Die Fig. 25 zeigt eine vorteilhafte Fügeverbindung zwischen einer profilartigen seitlichen Führungseinrichtung 30 und einen hieran angebundenen, in Fahrzeugquerrichtung verlaufenden Querträger 40, wie er beispielsweise in Fig. 14 und Fig. 15 dargestellt ist. Bei der Anordnung gemäß Fig. 25 handelt es sich jedoch um eine auf eine generell zwischen in Fahrzeughöhenrichtung angeordneten Streben und in Fahrzeugquerrichtung angeordneten Streben anwendbare Verbindungsmöglichkeit. Wie dabei ersichtlich ist, ist das Querprofil 40 als Hohlprofil mit mehreren Hohlräumen und einem Mittelsteg 45 ausgebildet, wobei im Bereich einer Verbindungsfläche mit der angrenzenden seitlichen Führungseinrichtung 30 eine Zentriernase 47 vorgesehen, welche in eine korrespondierende Ausnehmung 59 der Führungseinrichtung 30 eingreift. Hierzu kann beispielsweise die bezüglich Fig. 22 beschriebene Ausnehmung 33 zur Aufnahme des Zentrierelementes 32 dienen.

Des Weiteren sind zur einfacheren Fügeverbindung zwischen der Führungseinrichtung 30 und dem Querprofil 40 an der Führungseinrichtung 30 durch Ausfräsen ausgebildete seitliche Stützen 30A, 30B vorgesehen, welche das Querprofil 40 seitlich einfassen.

Wie bei der ersten Bauteilgruppe 1 und der zweiten Bauteilgruppe 2 kann die dritte Bauteilgruppe 3 nach Fig. 14 ff mit einem Verdeck zu einem extern vormontierten Multifunktionsmodul verbunden sein.

Die Zuordnung der einzelnen beschriebenen Komponenten zu den jeweils gezeigten Ausführungsbeispielen ist nur beispielhaft, so dass eine beliebige Kombination der beschriebenen Komponenten und deren Zusammenfügen zu einem Multifunktionsmodul möglich ist.

## Patentansprüche

1. Bauteilgruppe für ein Cabriolet-Fahrzeug, welche außerhalb des Fahrzeugs vormontiert und in das Fahrzeug einsetzbar ist, umfassend
- eine im Einbauzustand einen Insassenraum (13) und einen heckseitigen Aufnahmeraum (12) trennende Querversteifungsstruktur (10); und
- ein Überrollschutzsystem (11) mit einem karosseriefesten ersten Modul (4) mit Führungseinrichtungen (330) für ein zwischen einer abgesenkten Ruhelage und einer erhöhten Stützlage verfahrbares zweites Modul (5) mit wenigstens einem Überrollkörper (6, 24), wobei eine lösbare Halteeinrichtung (210, 310, 410) zum Halten des zweiten Moduls (5) in seiner Ruhelage, eine Verriegelungsvorrichtung (500, 600), mittels der das zweite Modul (5) in einer von seiner Ruhelage abweichenden Position gegen einen in Richtung der Ruhelage wirkenden Kraftangriff selbsttätig abstützbar ist, und ein Antriebssystem (50), mittels dem das zweite Modul (5) in seiner Ruheposition vorgespannt und im Bedarfsfall in Richtung seiner Stützlage verlagerbar ist, vorgesehen sind,
**dadurch gekennzeichnet,**
**dass** die Bauteilgruppe (1, 2, 3) Sitzelemente (152, 154, 156, 158, 160, 162, 164, 166) aus wenigstens einer der Sitzelementarten Sitzlehnenlager (152, 154, 156, 158), Sitzlehnen, Sitzunterteile, Kopfstützenaufnahmen (160, 162), Kopfstützen (164, 166), und ein in das fahrzeugfeste erste Modul (4) integriertes Rückhaltegurtsystem (100) mit Gurtführungen (110, 111, 114, 115) für wenigstens einen Rückhaltegurt (112, 113) umfasst und eine außerhalb des Fahrzeugs auf Funktionsfähigkeit prüfbare Baueinheit bildet.

2. Bauteilgruppe nach Anspruch 1,
**dadurch gekennzeichnet,**
**dass** die Bauteilgruppe (1, 2, 3) wenigstens Teile eines Verdecks (80) umfasst.

3. Bauteilgruppe nach Anspruch 1 oder 2,
**dadurch gekennzeichnet,**
**dass** die Kopfstützenaufnahmen (160, 162) an der Querversteifungsstruktur (10) festgelegt sind.

4. Bauteilgruppe nach einem der Ansprüche 2 oder 3,
**dadurch gekennzeichnet,**
**dass** das Verdeck (80) einen heckseitigen Karosseriedekkel (84) umfasst.

5. Bauteilgruppe nach einem der Ansprüche 1 bis 4,
**dadurch gekennzeichnet,**
**dass** eine Durchladeöffnung (60) zwischen dem heckseitigen Aufnahmeraum (12) und dem Insassenraum (13) angeordnet ist.

6. Bauteilgruppe nach einem der Ansprüche 1 bis 5,
**dadurch gekennzeichnet,**
**dass** das Rückhaltegurtsystem (100) wenigstens einen oberen Verankerungspunkt (120, 122) für einen Kindersitzrückhaltegurt umfasst.

7. Bauteilgruppe nach einem der Ansprüche 1 bis 6,
**dadurch gekennzeichnet,**
**dass** der Überrollkörper (24) jeweils einer einem Fahrzeugsitz (26, 28) zugeordneten ÜberrollschutzVorrichtung (22, 23) zugehörig und stangenartig ausgeführt ist und in seinem Inneren einen axialen Aufnahmekanal für einen Federkraftspeicher (52) des Antriebssystems (50) aufweist.

8. Bauteilgruppe nach Anspruch 7,
**dadurch gekennzeichnet,**
**dass** die Überrollschutz-Vorrichtungen (22, 23) zweier Fahrzeugsitze (26, 28) einer Sitzreihe jeweils in entgegengesetzter Richtung im Wesentlichen außermittig zu dem zugeordneten Fahrzeugsitz (26, 28) angeordnet sind.

9. Bauteilgruppe nach einem der Ansprüche 7 oder 8,
**dadurch gekennzeichnet,**
**dass** die einer Sitzreihe zugeordneten Überrollschutz-Vorrichtungen (22, 23) mittels eines Querträgers (40) verbunden sind.

10. Bauteilgruppe nach einem der Ansprüche 1 bis 6,
**dadurch gekennzeichnet,**
**dass** der Überrollkörper (6) als Überrollbügel ausgebildet ist, welcher im Wesentlichen die Fahrzeugbreite überspannend und wenigstens annähernd U-förmig mit einer Traverse (63) und seitlichen Schenkelelementen (64A, 64B) ausgebildet ist.

11. Bauteilgruppe nach Anspruch 10,
**dadurch gekennzeichnet,**
**dass** die Traverse (63) und die Schenkelelemente (64A, 64B) des überrollbügels (6) einstückig ausgeführt sind.

12. Bauteilgruppe nach einem der Ansprüche 10 oder 11,
**dadurch gekennzeichnet,**
**dass** die Halteeinrichtung (310) eine zentrale Halte- und Auslöseeinrichtung für den Überrollbügel (6) bildet und eine die Verlagerung der Schenkel (64A, 64B) des Überrollbügels (6) entlang der Führungseinrichtungen (30) synchronisierende Synchronisationseinrichtung (70) vorgesehen ist.

13. Bauteilgruppe nach einem der Ansprüche 1 bis 12,
**dadurch gekennzeichnet,**
**dass** das erste Modul (4) als Führungseinrichtungen des Überrollkörpers (6, 24) ein Rohrprofil (30) aufweist, in dem in Ruhelage des Überrollkörpers (6, 24) wenigstens ein oberer Endbereich und in Stützlage ein unterer Endbereich des Überrollkörpers (6, 24) aufgenommen sind.

14. Bauteilgruppe nach einem der Ansprüche 1 bis 13,
**dadurch gekennzeichnet,**
**dass** die lösbare Halteeinrichtung (310) ein um eine feste Drehachse (312) schwenkbar gelagertes Verriegelungselement (314), welches einen Klinkenabschnitt (316) zur Wirkverbindung mit einem an dem Überrollkörper (6, 24) angeordneten Verriegelungselement-Gegenkörper (318) in Ruheposition des Überrollkörpers (6, 24) aufweist, umfasst, wobei das Verriegelungselement (314) in Ruheposition durch einen im Crash-Fall aufschmelzbaren Schmelzeinsatz (348) des Aktuators (324) gehalten ist.

15. Bauteilgruppe nach einem der Ansprüche 1 bis 14,
**dadurch gekennzeichnet,**
**dass** die lösbare Halteeinrichtung (410) ein um eine feste Drehachse (412) schwenkbar gelagertes Verriegelungselement (414), welches einen Klinkenabschnitt (416) zur Wirkverbindung mit einem an dem Überrollkörper (6, 24) angeordneten Verriegelungselement-Gegenkörper (418) in Ruheposition des Überrollkörpers (6, 24) umfasst, wobei das Verriegelungselement (414) in Ruheposition in einer Anschlagposition gehalten ist, aus der es im Crash-Fall durch einen Aktuator (424) mit einem pyrotechnischen Treibsatz (425) in eine Rotationsposition überführbar ist.

16. Bauteilgruppe nach einem der Ansprüche 1 bis 15,
**dadurch gekennzeichnet,**
**dass** die Verriegelungsvorrichtung (600) wenigstens eine erste Rasteinrichtung (605) aufweist, die zum Abstützen des zweiten Moduls (5) mit einer zweiten Rasteinrichtung (606) in Wirkverbindung bringbar ist und die eine Bewegung des zweiten Moduls (5) ausgehend von seiner Ruhelage in Richtung seiner Stützlage zulässt, wobei die eine der Rasteinrichtungen (605, 606) mit einem der Module (4, 5) verbunden ist und einen exzentrisch um eine Drehachse (21) drehbar gelagerten und mit einem Zahnprofil (607) ausgeführten Sperrkörper (608A, 608B) aufweist und die jeweils andere Rasteinrichtung (606) als eine dem Sperrkörper (608A, 608B) zugewandte Oberfläche (606B) des jeweils anderen Moduls (5) ausgebildet ist, mit der das Zahnprofil (607) des Sperrkörpers (608A, 608B) in seiner Wirkposition derart in Reibeingriff steht, dass eine Bewegung des zweiten Moduls (5) aus einer von der Ruhelage abweichenden Position in Richtung seiner Ruhelage verhindert ist.

## Claims

1. A modular unit for a convertible vehicle, which modular unit is pre-assembled outside of the vehicle and can be inserted into the vehicle, said modular unit comprising:
- a transverse stiffening structure (10) which, when installed, separates an occupant space (13) and a rear stowage space (12); and
- a rollover protection system (11) including: a first module (4) mounted with respect to the vehicle body and having guide devices (30) for a second module (5), which is movable between a lowered rest position and an elevated support position and comprises at least one rollover element (6, 24), there being provided a releasable holding device (210, 310, 410) for holding the second module (5) in the rest position, a locking device (500, 600) for automatically supporting the second module (5) against a force acting in the direction of the rest position when it is in a position that deviates from the rest position, and a drive system (50) for biasing the second module (5) in the rest position and, if required, moving it to the support position, **characterised in that** the modular unit (1, 2, 3) comprises seat elements (152, 154, 156, 158, 160, 162, 164, 166) of at least one type, such as seatback bearings (152, 154, 156, 158), seatbacks, seat bases, head support mounts (160, 162), head supports (164, 166), and a restraining belt system (100), which is integrated into the first module (4) mounted with respect to the vehicle and comprises belt guides (110, 111, 114, 115) for at least one restraining belt (112, 113), and that the modular unit (1, 2, 3) forms a structural unit configured to be tested for functional capability outside of the vehicle.

2. The modular unit according to claim 1, **characterised in that** the modular unit (1, 2, 3) comprises at least parts of a convertible hood (80).

3. The modular unit according to claim 1 or 2, **characterised in that** the head support mounts (160, 162) are mounted to the transverse stiffening structure (10).

4. The modular unit according to any one of claims 2 or 3, **characterised in that** the convertible hood (80) includes a rear body cover (84).

5. The modular unit according to any one of claims 1 to 4, **characterised in that** a through-load opening (60) is provided between the rear stowage space (12) and the occupant space (13).

6. The modular unit according to any one of claims 1 to 5, **characterised in that** the restraining belt system (100) includes at least one upper anchoring point (120, 122) for a child safety seat restraining belt.

7. The modular unit according to any one of claims 1 to 6, **characterised in that** the rollover element (24) forms a portion of a respective rollover protection device (22, 23) associated with a vehicle seat (26, 28), is bar-like in form and is internally provided with an axial receiving channel for a spring force accumulator (52) of the drive system (50).

8. The modular unit according to claim 7, **characterised in that** the rollover protection devices (22, 23) of two vehicle seats (26, 28) of a row of seats are arranged in opposite directions, substantially off-centre relative to their associated vehicle seats (26, 28).

9. The modular unit according to any one of claims 7 or 8, **characterised in that** the rollover protection devices (22, 23) associated with one row of seats are connected to each other by a transverse support (40).

10. The modular unit according to any one of claims 1 to 6, **characterised in that** the rollover element (6) is provided as a rollover bar, which spans substantially the vehicle width and is designed with an at least approximately U-shaped configuration including a cross-arm (63) and lateral arm elements (64A, 64B).

11. The modular unit according to claim 10, **characterised in that** the cross-arm (63) and the arm elements (64A, 64B) of the rollover bar (6) are formed in one piece.

12. The modular unit according to any one of claims 10 or 11, **characterised in that** the holding device (310) forms a central holding and releasing device for the rollover bar (6) and that a synchronisation device (70) synchronising the movement of the arms (64A, 64B) of the rollover bar (6) along the guide devices (30) is provided.

13. The modular unit according to any one of claims 1 to 12, **characterised in that** the first module (4) has a tube profile (30) as guide devices for the rollover elements (6, 24), which tube profile (30) receives at least an upper end region of the rollover element (6, 24) in the rest position of the latter and receives a lower end region of the rollover element (6, 24) in the support position of the latter.

14. The modular unit according to any one of claims 1 to 13, **characterised in that** the releasable holding device (310) includes a locking element (314) pivotable about a fixed axis of rotation (312), wherein the locking element (314) includes a detent section (316) for engagement with a mating element (318) disposed with respect to the rollover element (6, 24) when the rollover element (6, 24) is in the rest position, and wherein the locking element (314), in the rest position, is held by a fusible insert (348) of the actuator (324) that can be melted in the event of a crash.

15. The modular unit according to any one of claims 1 to 14, **characterised in that** the releasable holding device (410) includes a locking element (414) pivotable about a fixed axis of rotation (412), wherein the locking element (414) includes a detent section (416) for engagement with a mating element (418) disposed with respect to the rollover element (6, 24) when the rollover element (6, 24) is in the rest position, and wherein the locking element (414), in the rest position, is held in a stop position, from which it can be transferred to a rotation position in the event of a crash by an actuator (424) with a pyrotechnic propellant charge (425).

16. The modular unit according to any one of claims 1 to 15, **characterised in that** the locking device (600) has at least one first catch device (605), which can be effectively connected to a second catch device (606) to support the second module (5) and permits movement of the second module (5), starting from the rest position, in the direction of its support position, wherein one of the catch devices (605, 606) is connected to one of the modules (4, 5) and has a blocking element (608A, 608B) mounted to rotate eccentrically around an axis of rotation (21) and having a tooth profile (607), and the other catch device (606) is provided as a surface (606B) of the other module (5) facing the blocking element (608A, 608B), with which the tooth profile (607) of the blocking element (608A, 608B) is in frictional engagement in its active position, so that movement of the second module (5) from a position deviating from the rest position in the direction of the rest position is prevented.

## Revendications

1. Ensemble de composants pour un véhicule cabriolet, ledit ensemble étant préassemblé en dehors dudit véhicule et pouvant être inséré dans ledit véhicule, et ledit ensemble comportant:
- une structure de renfort transversal (10) qui, en condition installée, sépare un habitacle (13) et un compartiment de rangement arrière (12), et
- un système de protection au retournement (11) comportant un premier module (4), monté fixe sur la carrosserie, avec des dispositifs de guidage (30) pour un deuxième module (5) qui est déplaçable entre une position de repos abaissée et une position d'appui levée et comprend au moins un corps de sécurité (6, 24), et un dispositif de maintien amovible (210, 310, 410) pour maintenir le deuxième module (5) dans sa position de repos étant prévu ainsi qu'un dispositif de blocage (500, 600) au moyen duquel le deuxième module (5) peut être automatiquement supporté à l'encontre d'un effort agissant en direction de la position de repos dans une position du deuxième module (5) différente de sa position de repos, et un système d'entraînement (50) au moyen duquel le deuxième module (5) est précontraint dans sa position de repos et peut être amené en direction de sa position d'appui en cas de besoin, **caractérisé en ce que** ledit ensemble de composants (1, 2, 3) comprend des éléments de siège (152, 154, 156, 158, 160, 162, 164, 166) d'au moins un type choisi parmi les paliers de dossier (152, 154, 156, 158), les dossiers, les assises, les logements d'appuie-têtes (160, 162), les appuie-têtes (164, 166), et un système de ceintures de retenue (100) qui est intégré dans le premier module (4), monté fixe sur le véhicule, et comporte des guides de ceinture (110, 111, 114, 115) pour au moins une ceinture de retenue (112, 113), et **en ce que** ledit ensemble de composants (1, 2, 3) constitue un ensemble dont on peut contrôler le fonctionnement en dehors du véhicule.

2. Ensemble de composants selon la revendication 1, **caractérisé en ce que** ledit ensemble de composants (1, 2, 3) comporte au moins des parties d'une capote (80).

3. Ensemble de composants selon la revendication 1 ou 2, **caractérisé en ce que** les logements d'appuie-têtes (160, 162) sont montés sur la structure de renfort transversal (10).

4. Ensemble de composants selon l'une quelconque des revendications 2 ou 3, **caractérisé en ce que** la capote (80) comporte un couvercle de carrosserie arrière (84).

5. Ensemble de composants selon l'une quelconque des revendications 1 à 4, **caractérisé en ce qu'**une ouverture de passage (60) est disposée entre le compartiment de rangement arrière (12) et l'habitacle (13).

6. Ensemble de composants selon l'une quelconque des revendications 1 à 5, **caractérisé en ce que** le système de ceinture de retenue (100) comporte au moins un point d'ancrage supérieur (120, 122) pour une ceinture de retenue d'un siège enfant.

7. Ensemble de composants selon l'une quelconque des revendications 1 à 6, **caractérisé en ce que** le corps de sécurité (24) fait partie d'un dispositif de protection au retournement (22, 23) respectif associé avec un siège de véhicule (26, 28), est réalisé sous forme d'une barre et présente à son intérieur un canal axial de logement pour un accumulateur de force à ressort (52) du système d'entraînement (50).

8. Ensemble de composants selon la revendication 7, **caractérisé en ce que** les dispositifs de protection au retournement (22, 23) de deux sièges de véhicule (26, 28) d'une rangée de sièges sont disposés en directions opposées, de manière sensiblement eccentrique par rapport au siège de véhicule (26, 28) associé.

9. Ensemble de composants selon l'une quelconque des revendications 7 ou 8, **caractérisé en ce que** les dispositifs de protection au retournement (22, 23) associés avec une rangée de sièges sont reliés l'un à l'autre par un support transversal (40).

10. Ensemble de composants selon l'une quelconque des revendications 1 à 6, **caractérisé en ce que** le corps de sécurité (6) est réalisé sous forme d'un arceau de sécurité, qui s'étend sensiblement sur toute la largeur du véhicule et présente une forme au moins approximative en U, comportant une traverse (63) et des bras latéraux (64A, 64B).

11. Ensemble de composants selon la revendication 10, **caractérisé en ce que** la traverse (63) et les bras (64A, 64B) de l'arceau de sécurité (6) sont réalisés en une seule pièce.

12. Ensemble de composants selon l'une quelconque des revendications 10 ou 11, **caractérisé en ce que** le dispositif de maintien (310) constitue un dispositif central de maintien et de libération de l'arceau de sécurité (6) et **en ce que** l'on prévoit un dispositif de synchronisation (70) destiné à synchroniser le déplacement des bras (64A, 64B) de l'arceau de sécurité (6) selon les dispositifs de guidage (30).

13. Ensemble de composants selon l'une quelconque des revendications 1 à 12, **caractérisé en ce que** le premier module (4) présente un profil tubulaire (30) en tant que dispositifs de guidage pour le corps de sécurité (6, 24), ce profil tubulaire (30) recevant au moins une région d'extrémité supérieure du corps de sécurité (6, 24) dans la position de repos de ce dernier et une région d'extrémité inférieure du corps de sécurité (6, 24) dans la position d'appui de ce dernier.

14. Ensemble de composants selon l'une quelconque des revendications 1 à 13, **caractérisé en ce que** le dispositif de maintien amovible (310) comporte un élément de verrouillage (314) monté pivotant autour d'un axe fixe de rotation (312), ledit élément de verrouillage (314) présentant une partie en forme de cliquet (316) destinée à coopérer avec un contre-élément de verrouillage (318), qui est disposé sur le corps de sécurité (6, 24), dans la position de repos du corps de sécurité (6, 24), l'élément de verrouillage (314) étant maintenu en position de repos par une pièce fusible (348) de l'actionneur (324), qui est fusible dans un accident.

15. Ensemble de composants selon l'une quelconque des revendications 1 à 14, **caractérisé en ce que** le dispositif de maintien amovible (410) comporte un élément de verrouillage (414) monté pivotant autour d'un axe fixe de rotation (412), ledit élément de verrouillage (414) présentant une partie en forme de cliquet (416) destinée à coopérer avec un contre-élément de verrouillage (418), qui est disposé sur le corps de sécurité (6, 24), dans la position de repos du corps de sécurité (6, 24), l'élément de verrouillage (414) en position de repos étant maintenu dans une position de butée, à partir de laquelle il peut être amené vers une position de rotation, dans un accident, par un actionneur (424) comportant une charge de propulsion pyrotechnique (425).

16. Ensemble de composants selon l'une quelconque des revendications 1 à 15, **caractérisé en ce que** le dispositif de verrouillage (600) présente au moins un dispositif d'encliquetage (605) qui peut coopérer avec un deuxième dispositif d'encliquetage (606) afin de supporter le deuxième module (5), permet un mouvement du deuxième module (5) à partir de sa position de repos vers sa position d'appui, dans laquelle l'un des dispositifs d'encliquetage (605, 606) est relié avec l'un des modules (4, 5), et comprend un élément de blocage (608A, 608B) monté en rotation eccentrique autour d'un axe de rotation (21) et présentant un profil denté (607), et l'autre dispositif d'encliquetage (606) étant réalisé sous forme d'une face (606B) de l'autre module (5) tournée vers l'élément de blocage (608A, 608B) avec laquelle le profil denté (607) de l'élément de blocage (608A, 608B) vient en prise frictionnelle, dans sa position active, de manière à supprimer un déplacement du deuxième module (5) à partir d'une position différente de sa position de repos vers sa position de repos.
